# EUROPEAN PATENT SPECIFICATION

(11) **EP 1 429 496 B1**
(45) Date of publication and mention of the grant of the patent: **12.12.2007**
(21) Application number: 03257540.9
(22) Date of filing: 29.11.2003
(51) Int. Cl.: H04L 12/28

(54) **Apparatus and method for making a polling list taking QOS into consideration**
Vorrichtung und Verfahren zur Bereitstellung einer QOS berücksichtigenden Abfrageliste
Appareil et procédé pour fournir une liste d'interrogation prenant en compte la qualité de service

(30) Priority: 02.12.2002 KR 2002076030; 28.12.2002 KR 2002085914
(43) Date of publication of application: 16.06.2004
(73) Proprietor: SAMSUNG ELECTRONICS CO., LTD., Suwon-City, Kyungki-do (KR)
(72) Inventor: Kim, Jun-whan, Seoul (KR)
(74) Representative: Clark, David James

(56) References cited:
- EP-A- 1 189 389
- EP-A- 1 237 334
- US-A- 5 297 144
- US-A- 5 615 212
- US-A1- 2002 071 449

## Description

The present invention relates to an apparatus and method for making a polling list based on IEEE 802.11e standards.

According to the IEEE 802.11e standards, a basic service set (BSS) including an access point (AP) is referred to as an infrastructure mode, and a BSS without an AP is referred to as an ad-hoc mode. A set of stations in the ad-hoc mode is referred to as an independent basic service set (IBSS). Among the functions of a media access control (MAC) protocols, a distributed coordination function (DCF) and an enhanced distributed coordination function (EDCF) providing quality of service (QOS) are operated only in the ad-hoc mode and transmit a MAC protocol data unit (MPDU) through a contention. A period of time during which the MPDU is transmitted through the contention is referred to as a contention period (CP). In the meantime, the infrastructure mode includes all of the functions included in the ad-hoc mode, a point coordination function (PCF), and a hybrid coordination function (HCF) providing QOS. The infrastructure mode include both contention and polling methods. A period of time during which the MPDU is transmitted through a poll is referred to as a contention free period (CFP). Although the IEEE 802.11e standards define a mechanism based on polling in which only a station receiving a poll frame is given a chance to transmit data, it has problems in processing multimedia data due to an unpredictable arrival delay of a beacon frame and an unknown transmission period of stations. In other words, a coordinator station schedules a beacon as a next frame to be transmitted at a target beacon transmission time (TBTT), and the scheduled beacon is transmitted while a channel is not used for a predetermined period of time. That is, at the TBTT, an arrival delay of a beacon frame occurs depending on whether a channel is being used. Arrival delay of the beacon frame causes a transmission delay of an MPDU to be transmitted during the CFP. The IEEE 802.11e standards have a problem in that stations cannot start transmission when the MPDU transmission is not completed before a coming TBTT.

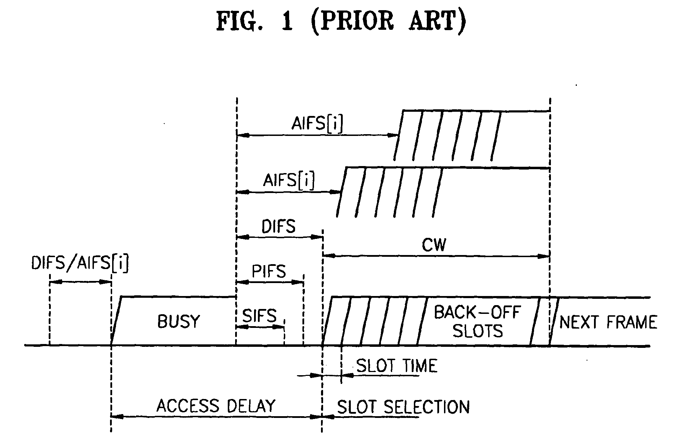

Figure 1 is a diagram showing a conventional back-off mechanism. A MAC mechanism in the ad-hoc mode is as follows. A fundamental MAC structure includes a distributed coordination function based on a carrier sense multiple access (CSMA). When transmitting an MPDU, a channel is checked to find out whether it is used. If the channel is being used, that is, is busy, the MPDU is held in standby for a predetermined period of time for back off. If the channel is not being used, that is, is idle, the MPDU is transmitted. Here, a binary back-off mechanism is used. IEEE 802.11 uses a CSMA with collision avoidance (CSMACA) as a method of transmitting an MPDU through a contention in order to reduce a possibility of collision between stations. When a channel is idle during a period of time corresponding to a DCF inter-frame space (DIFS), back-off is performed for additional transmission during a certain period of time. The certain period of time is determined by the number of slot times (9 µs in IEEE 802.11a), and each station has a contention window (CW) section in order to determine the number of slot times for a certain back-off before transmission. If the channel is still being used even after the certain back-off, the number of slot times is calculated again to set a greater back-off time. At retrial, the back-off time is determined within a double CW. The CW is managed as a minimum CW (CWmin) or a maximum CW (CWmax). If a station succeeds in transmission, it receives an acknowledgement (ACK) frame after a short inter-frame space (SIFS). If not, the station tries re-transmission. The number of re-transmissions is limited to a certain value, and when the number of re-transmissions exceeds the certain value, the relevant MPDU is removed.

The EDCF is an expanded MAC protocol for providing QOS to the DCF. Such expansion is implemented using an access category (AC) classified by a user priority (UP). The UP is a traffic type suggested in IEEE 802.11d standards and has a value from 0 to 7. 8 different UPs are classified into 4 different ACs, and an MPDU is stored in a transmission queue and transmitted through contention based on priority. Here, a station uses multiple back-offs distinguished from one another by AC parameters. As shown in Figure 1, when a medium is idle during a period of time corresponding to an arbitrary inter-frame space (AIFS) within the CP, CW[AC] between CWmin[AC] and CWmax[AC] is arbitrarily selected, and a back-off is operated. The AIFS is a minimum priority frame space and expands in an increasing order of priority. Internally, four back-offs are performed, and an MPDU winning a contention is given an opportunity to be transmitted first. A collision occurring during the contention is referred to as an internal collision, and a collision occurring during transmission outside is referred to as an external collision. The basic concept of the EDCF is setting multiple AIFSs and back-off times according to priority in order to minimize collision. Contention according to priority gives an opportunity of transmission to a station having an MPDU with a high priority prior to other stations having an MPDU with a lower priority.

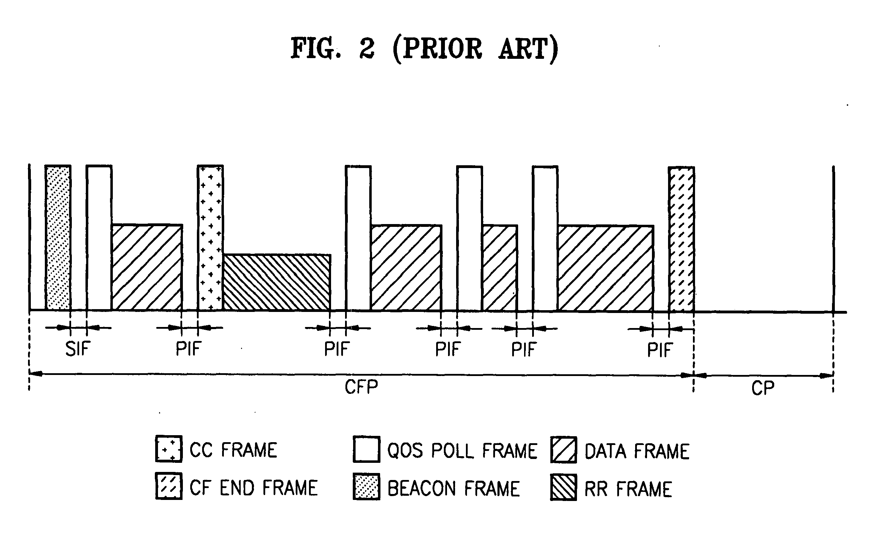

Figure 2 is a diagram showing a procedure of performing the conventional HCF. A MAC mechanism in the infrastructure mode is as follows. In the HCF, a point coordinator transmits a poll frame to a station which can receive a poll. When the station receives the poll frame, it is given an opportunity to transmit an MPDU. After completion of data transmission, the point coordinator transmits the poll frame to a next station to give the station an opportunity to transmit an MPDU. If the station does not have any MPDU to transmit, it transmits a null frame to the point coordinator. Generally, the point coordinator transmits the poll frame to all stations using a round robin method during the CFP.

The HCF is fundamentally similar to the PCF. As shown in Figure 2, a hybrid coordinator transmits a QOS poll frame to each station, and the station receiving the QOS poll frame transmits an MPDU. The hybrid coordinator transmits the QOS poll frame during the CP as well as the CFP. In order to distinguish the CP from the CFP, the hybrid coordinator transmits a contention free (CF) end frame. The hybrid coordinator makes a polling list to transmit the QOS poll frame during a controlled contention interval (CCI). If the hybrid coordinator broadcasts a controlled contention (CC) frame to each station, a station having an MPDU to transmit sends a reservation request (RR) frame in response to the CC frame. The hybrid coordinator makes the polling list based on the RR frame. The polling list shows sequence of stations to which a poll is to be transmitted. Accordingly, it is very important for a hybrid coordinator to make an optimal polling list to secure the QOS in the MAC.

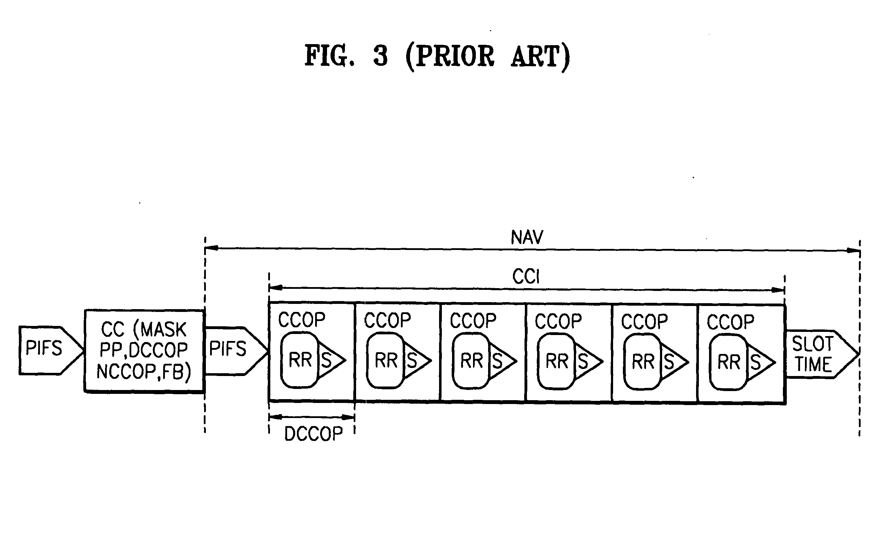

Figure 3 is a diagram showing a mechanism of making a polling list suggested in the IEEE 802.11e standards. According to the IEEE 802.11e standards, a hybrid coordinator makes a polling list using a CC frame and RR frames during the CCI. After transmitting the CC frame, the hybrid coordinator divides the CCI into plurality of Duration of Controlled Contention OPportunity (DCCOP) to define an interval (i.e., a slot time) during which each station can transmit the RR frame to the hybrid coordinator. Each station makes random numbers and transmits the RR frame using one among 1 through a maximum of 255 intervals. The IEEE 802.11e standards do not suggest in detail a method in which the hybrid coordinator makes the polling list using the received RR frames.

Conventionally, a station transmits the RR frame during the DCCOP selected using an arbitrary number. The DCCOP is selected regardless of the priority of data to be transmitted by a station, and it happens that all stations cannot participate in the selection. In addition, the hybrid coordinator needs to perform an algorithm for determining an order in which a QOS poll is transmitted to the stations based on the RR frames. This necessity burdens the hybrid coordinator with a heavy load. Moreover, it happens that a station having data with high priority cannot select any DCCOP. For example, when random numbers made by two stations are the same, the same DCCOP is selected, and collision occurs between the stations. As a result, transmission of the RR frames is delayed, and therefore, the stations cannot be registered in the polling list. If the stations omitted from the polling list have data with high priority, QOS cannot be secured. Furthermore, even if the RR frames are normally received, the hybrid coordinator needs to make the polling list using a unique algorithm, which increases an internal processing load on the hybrid coordinator.

US 5297144 discloses a wireless data communication network having a number of users communicating from individual remote states to a central station. During a first stage of a polling protocol the central station provides a synchronization signal to the remote stations to define the start of a reservation request period, and allocates fixed time slots during which any remote station having a data message to transmit may request access and reserve a portion of the channel for their data messages. During a second stage the central station polls only those remote stations that have a data message to transmit and have requested access to the channel. In response to the poll, the polled remote stations transmit their data message in their previously reserved data slots.

According to the present invention there is provided an apparatus and method as set forth in the appended claims. Preferred features of the invention will be apparent from the dependent claims, and the description which follows.

The present invention provides an apparatus and method for fairly and efficiently making a quality of service-supporting polling list.

In one aspect of the present invention, there is provided a coordinator polling list making apparatus comprising: a controlled contention frame transmitter adapted to which generate a controlled contention frame when making a polling list is requested and further adapted to transmit the controlled contention frame to stations on a network through a predetermined channel using a broadcast method; a reservation request frame receiver adapted to, receive a reservation request frame from each of the stations through the predetermined channel as a response to the controlled contention frame during a controlled contention interval designated by the controlled contention frame; and a polling list making unit adapted to allocate a poll frame transmission sequence to the stations, from which the reservation request frame is received, when the reservation request frame receiver receives the reservation request frame, and further adapted to make a polling list comprising the poll frame transmission sequence; characterised in that the network is a basic service set of a wireless LAN; that the polling list making unit is adapted to allocate the poll frame transmission sequence using a first come first serve method based on a sequence in which reservation request frames arrive; and that the controlled contention frame transmitter is adapted to transmit the controlled contention frame after a period of time corresponding to a priority inter-frame space lapses since receipt of the request of making a polling list.

According to another aspect of the present invention, there is provided a station polling list making apparatus comprising: a controlled contention frame receiver adapted to receive a controlled contention frame through a predetermined channel from a coordinator station among stations on a network; and a reservation request frame transmitter adapted to contend for use of the predetermined channel during a controlled contention interval designated by the controlled contention frame so as to acquire an exclusive right of using the predetermined channel when the controlled contention frame is received by the controlled contention frame receiver, adapted to generate a reservation request frame as a response to the controlled contention frame when the exclusive right is acquired, and is further adapted to transmit the reservation request frame to the coordinator station through the predetermined channel; characterised in that the network is a basic service set of a wireless LAN; that the reservation request frame transmitter is adapted to contends for use of the predetermined channel during a controlled contention interval designated by the controlled contention frame according to a user priority value of a data frame; and that the station polling list making apparatus is adapted to receive the controlled contention frame after a period of time corresponding to a priority inter-frame space lapses since receipt of a request to make a polling list from the coordinator station.

According to still another aspect of the present invention, there is provided an apparatus for making a polling list, comprising: a coordinator polling list making apparatus adapted to generate a controlled contention frame when making a polling list is requested and further adapted to transmit the controlled contention frame to stations on a network through a predetermined channel using a broadcast method, and when a reservation request frame from each of the stations is received as a response to the controlled contention frame through the predetermined channel during a controlled contention interval designated by the controlled contention frame, still further adapted to allocate a poll frame transmission sequence to the stations, from which the reservation request frame is received, and yet still further adapted to make a polling list comprising the poll frame transmission sequence; and a station polling list making apparatus, which when the controlled contention frame is received through the predetermined channel from the coordinator polling list making apparatus, is adapted to contend for use of the predetermined channel during the controlled contention interval designated by the controlled contention frame so as to acquire an exclusive right of using the predetermined channel, and when the exclusive right is acquired, is further adapted to generate a reservation request frame as a response to the controlled contention frame and transmits the reservation request frame to the coordinator polling list making apparatus through the predetermined channel; characterised in that the network is a basic service set of a wireless LAN; that the co-ordinator polling list making is adapted to allocate the poll frame transmission sequence using a first come first serve method based on a sequence in which reservation request frames arrive; and to transmit the controlled contention frame after a period of time corresponding to a priority inter-frame space lapses since receipt of the request of making a polling list; that the reservation request frame transmitter is adapted to contend for use of the predetermined channel during a controlled contention interval designed by the controlled contention frame according to a user priority value of a data frame; and that the station polling list making apparatus is adapted to receive the controlled contention frame after a period of time corresponding to a priority inter-frame space lapses since receipt of the request of making a polling list.

According to still another aspect of the present invention, there is provided a method of making a coordinator polling list, comprising: when making a polling list is requested, generating a controlled contention frame and transmitting the controlled contention frame to stations on a network through a predetermined channel using a broadcast method; receiving a reservation request frame from each of the stations as a response to the controlled contention frame through the predetermined channel during a controlled contention interval designated by the controlled contention frame; when the reservation request frame is received, allocating a poll frame transmission sequence to the stations, from which the reservation request frame is received, and making a polling list comprising the poll frame transmission sequence; characterised in that the network is a basic service set of a wireless LAN; that the allocating of the poll frame transmission sequence is performed using a first come first serve method based on a sequence in which reservation request frames arrive; and that the controlled contention frame is transmitted after a period of time corresponding to a priority inter-frame space lapses since receipt of the request of making a polling list.

According to still another aspect of the present invention, there is provided a method of making a station polling list, comprising: (a) receiving a controlled contention frame through a predetermined channel from a coordinator station among stations on a network; and (b) when the controlled contention frame is received, contending for use of the predetermined channel during a controlled contention interval designated by the controlled contention frame so as to acquire an exclusive right of using the predetermined channel, generating a reservation request frame as a response to the controlled contention frame when the exclusive right is acquired, and transmitting the reservation request frame to the coordinator station through the predetermined channel; characterised in that in that the network is a basic service set of a wireless LAN; that in step (b) the contention for use of the predetermined channel is performed according to a user priority value of a data frame; and that in step (a) the controlled contention frame is received after a period of time corresponding to a priority inter-frame space lapses.

According to still another aspect of the present invention, there is provided a method of making a polling list, comprising: (a) when making a polling list is requested, generating a controlled contention frame and transmitting the controlled contention frame to stations on a network through a predetermined channel using a broadcast method, and when a reservation request frame from each of the stations is received as a response to the controlled contention frame through the predetermined channel during a controlled contention interval designated by the controlled contention frame, allocating a poll frame transmission sequence to the stations, from which the reservation request frame is received, and making a polling list comprising the poll frame transmission sequence; and (b) when the controlled contention frame is received through the predetermined channel, contending for use of the predetermined channel during the controlled contention interval designated by the controlled contention frame so as to acquire an exclusive right of using the predetermined channel, and when the exclusive right is acquired, generating a reservation request frame as a response to the controlled contention frame and transmitting the reservation request frame to the coordinator polling list making apparatus through the predetermined channel; characterised in that the network is a basic service set of a wireless LAN; that in step (a) the poll frame transmission sequence is allocated using a first come first serve method based on a sequence in which reservation request frames arrive; and that the controlled contention frame is transmitted after a period of time corresponding to a priority inter-frame space lapses since receipt of the request of making a polling list; and that in step (b) the contention for use of the predetermined channel is performed according to a user priority value of a data frame.

For a better understanding of the invention, and to show how embodiments of the same may be carried into effect, reference will now be made, by way of example, to the accompanying diagrammatic drawings in which:
Figure 1 is a diagram showing a conventional back-off mechanism;
Figure 2 is a diagram showing a procedure of performing a conventional hybrid coordination function (HCF);
Figure 3 is a diagram showing a mechanism of making a polling list suggested in IEEE 802.11e standards;
Figure 4 is a diagram showing a procedure for making a polling list according to an embodiment of the present invention;
Figure 5 is a diagram of an apparatus for making a polling list according to an embodiment of the present invention;
Figure 6 is a diagram showing a format of a controlled contention (CC) frame used in the present invention;
Figure 7 is a diagram showing a format of a reservation request (RR) frame used in the present invention;
Figure 8 is a diagram showing a format of a poll frame used in the present invention;
Figure 9 is a flowchart of a method of making a poling list in a coordinator, according to an embodiment of the present invention;
Figure 10 is a flowchart of a method of making a poling list in a station, according to the present invention;
Figure 11 is a diagram showing a procedure for performing an enhanced distributed coordination function (EDCF) using the present invention; and
Figure 12 is a graph showing the results of simulations for evaluating the performance of the EDCF using the present invention.

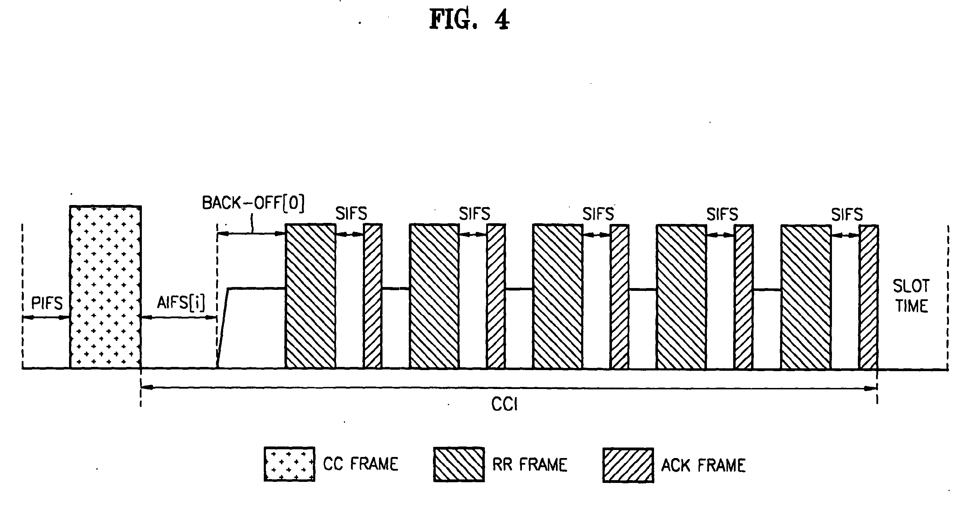

Figure 4 is a diagram showing a procedure for making a polling list according to an embodiment of the present invention. Generally, the present invention is applied to a network environment referred to as a basic service set (BSS) defined in IEEE 802.11 wireless LAN standards. The BSS is a set of stations within a distance allowing communication. Since a range of propagation is uncertain, the BSS does not indicate a particular region. The present invention is applied to an infrastructure mode having an access point (AP) performing relay between stations constituting the BSS. The AP is a coordinator station. The infrastructure mode includes a point coordination function (PCF) or a hybrid coordination function (HCF) supporting quality of service (QOS). The present invention is applied to the HCF supporting the QOS, and thus, the coordinator is a hybrid coordinator. The polling list indicates an order in which priority of data transmission is given, and a station with a high order in the polling list is expected to have transmission data with high priority. Making the polling list needs to be fairly and efficiently performed between the coordinator and the stations to transmit data without burdening the stations and the coordinator with a heavy load.

As shown in Figure 4, when receiving a request to make the polling list, the coordinator broadcasts a controlled contention (CC) frame to all stations included in the BSS including the coordinator after a period of time corresponding to a priority inter-frame space (PIFS) lapses since receipt of the request. The PIFS is composed of a short inter-frame space (SIFS) and a single slot time. The lengths of the SIFS and the slot time are determined at a physical layer below a media access control (MAC) layer. According to the IEEE 802.11 standards, the CC frame can be transmitted while a channel is not being used during a period of time corresponding to the PIFS. Stations having a MAC protocol data unit (MPDU) to transmit prepares for transmitting a reservation request (RR) frame in response to the CC frame. The stations transmit the RR frame in response to the CC frame using an enhanced distributed coordination function (EDCF), and the coordinator transmits an acknowledgement (ACK) frame of the RR frame. The stations transmit the RR frame during a controlled contention interval (CCI), and the CC frame is used to inform each station of the CCI and an instant of time the RR frame is transmitted. The coordinator transmits the CC frame when the polling list is empty or when the polling list is not completed within the CCI. The CCI is determined according to the number of stations. With respect to RR frames transmitted from the stations based on the EDCF, the coordinator makes the polling list using a first come first serve (FCFS) method. The coordinator transmits a poll frame to a station according to an order registered in the polling list.

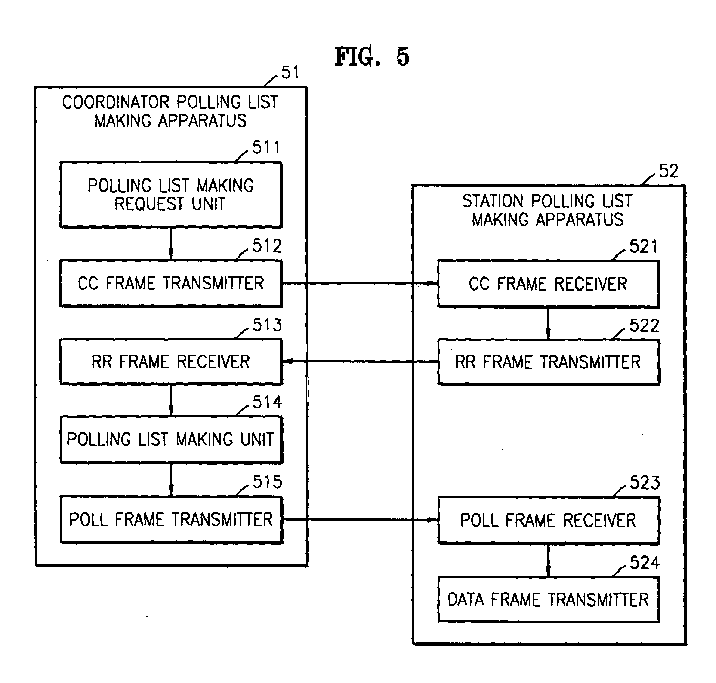

Figure 5 is a diagram of an apparatus for making a polling list according to an embodiment of the present invention. A coordinator polling list making apparatus 51 corresponds to a coordinator station in the apparatus and includes a polling list making request unit 511, a CC frame transmitter 512, an RR frame receiver 513, a polling list making unit 514, and a poll frame transmitter 515.

The polling list making request unit 511 requests to make a polling list when a polling list is not made or when RR frames are not received from all of stations that have transmitted the RR frames during a CCI. In other words, when a polling list in the coordinator station is empty, or when a polling list is not completed because all of the RR frames transmitted from stations are not received during the CCI, the polling list making request unit 511 requests to make the polling list. The CCI is a period during which the polling list is made through a contention for channel use between the stations according to a user priority (UP) value of data to be transmitted by each station. The length of the CCI is proportional to the number of station on a network. As the number of stations increases, time taken for making the polling list increases, and therefore, the length of the CCI increases.

The CC frame transmitter 512 generates a CC frame in response to the request to make the polling list, and transmits the CC frame to stations on a predetermined network through a predetermined channel using a broadcast method after a period of time corresponding to a PIFS lapses since receipt of the request. According to the IEEE 802.11 standards, the CC frame can be transmitted while the channel is not being used during the period of time corresponding to the PIFS. For this reason, after the period of time corresponding to the PIFS lapses, the CC frame is transmitted to all stations in a BSS through the channel using the broadcast method. Here, the CC frame is a kind of management frame and includes a frame control field, a period/ID field, a receiver address field, a BSS ID field, a CCI length field, and a frame inspection sequence field.

The RR frame receiver 513 receives an RR frame as a response to the CC frame transmitted by the CC frame transmitter 512 through the channel during the CCI designated by the CC frame. In other words, the coordinator polling list making apparatus 51 receives RR frames from a plurality of stations receiving the CC frame. The RR frame is a management frame and includes a frame control field, a period/ID field, a receiver address field, a BSS ID field, a QOS control field, an association ID field, and a frame inspection sequence field. In order to support QOS, values of a data rate, a burst size, a delay bound, and a jitter bound are recorded in the QOS control field. Each station receiving the CC frame records QOS control information on an MPDU to transmit in an RR frame and then transmits the RR frame to the coordinator polling list making apparatus 51.

When the RR frame receiver 513 receives RR frames, the polling list making unit 514 allocates a poll frame transmission sequence to the stations having transmitted the received RR frame using an FCFS method based on an order in which the received RR frames arrive and makes a polling list including the poll frame transmission sequence. In other words, the coordinator polling list making apparatus 51 makes the polling list by storing the RR frames in a queue in received order. The received order of the RR frames depends on a contention between stations according to priority, and therefore, a station having data with a highest priority value can receive a poll frame first. The poll frame is a management frame and includes a frame control field, a period/ID field, a receiver address field, a BSS ID field, a QOS control field, a data transmitting/receiving period length field, and a frame inspection sequence field. A poll frame supporting the QOS is referred to as a QOS poll frame.

The poll frame transmitter 515 transmits a poll frame to the stations from which the RR frames are received by the RR frame receiver 513 through the channel according to the poll frame transmission sequence included in the polling list made by the polling list making unit 514. In other words, according to the polling list, a QOS poll frame is sequentially transmitted to the stations. Values of factors, such as a data rate, a burst size, a delay bound, and a jitter bound, for QOS are recorded in the QOS control field of the QOS poll frame. A station receiving the QOS poll frame transmits an MPDU based on the factors for QOS recorded in the QOS poll frame.

A station polling list making apparatus 52 corresponds to a station in the apparatus for making a polling list according to the embodiment of the present invention and includes a CC frame receiver 521, an RR frame transmitter 522, a poll frame receiver 523, and a data frame transmitter 524.

The CC frame receiver 521 receives the CC frame through the predetermined channel from the coordinator station among the stations on the predetermined network. As described above, the CC frame includes a frame control field, a period/ID field, a receiver address field, a BSS ID field, a CCI length field, and a frame inspection sequence field.

When the CC frame receivers 521 receives the CC frame, the RR frame transmitter 522 contends for the use of the predetermined channel according to the UP value of a data frame to be transmitted during the CCI designated by the received CC frame. When the CC frame receivers 521 exclusively acquires the use of the predetermined channel as the result of the contention, it generates and transmits an RR frame as a response to the CC frame to the coordinator station through the predetermined channel. As described above, the CCI increases in proportional to the number of station included in the BSS. If a station does not transmit an RR frame within current CCI, it waits for a next CC frame. The station that does not transmit the RR frame within the current CCI is determined as having a lower priority than stations transmitting the RR frame and participates in a contention again after receiving the next CC frame.

The following description concerns the contention for the use of a channel. The RR frame transmitter 522 sets a coordination inter-frame space value and a convention window (CW) value according to the UP value and detects whether the channel is being used after a period of time corresponding to the coordination inter-frame space value and a back-off time corresponding to the CW value sequentially lapse. If the channel is not being used, the RR frame transmitter 522 acquires the exclusive right of using the channel. However, if the channel is being used, the RR frame transmitter 522 does not acquire the right of using the channel and resets the CW value to extend using a back-off algorithm. According to the IEEE 802.11 standards, 8 UP values allocated to MPDUs to be transmitted are classified into 4 access categories (ACs), and channel contention is performed based on a coordination inter-frame space value and a CW value included in an AC into which an MPDU is classified. As described above, the RR frame includes a frame control field, a period/ID field, a receiver address field, a BSS ID field, a QOS control field, an association ID field, and a frame inspection sequence field. The QOS control field contains values of a data rate, a burst size, a delay bound, and a jitter bound.

The poll frame receiver 523 receives a poll frame, which is transmitted through a channel from the coordinator station according to the poll frame transmission sequence included in the polling list. Since poll frame transmission sequence is determined according to the UP values, a station having data with a highest UP value receives the poll frame first. As described above, the poll frame includes a frame control field, a period/ID field, a receiver address field, a BSS ID field, a QOS control field, a data transmitting/receiving period length field, and a frame inspection sequence field.

When the poll frame receiver 523 receives the poll frame, the data frame transmitter 524 transmits a data frame to a destination station of the data frame through a channel during a data transmitting/receiving period designated by the received poll frame. In other words, according to the priority of data to be transmitted, the station receiving the poll frame transmits the data frame to a destination station of the data frame during a data transmitting/receiving period indicated by the data transmitting/receiving period length field in the poll frame.

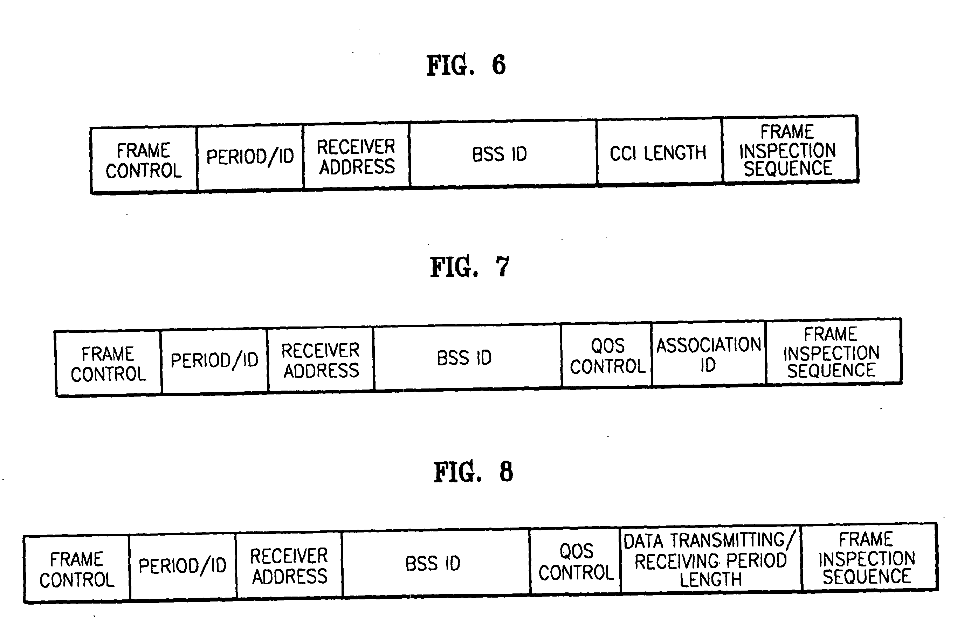

Figure 6 is a diagram showing a format of a CC frame used in the present invention. The CC frame includes a frame control field, a period/ID field, a receiver address field, a BSS ID field, a CCI length field, and a frame inspection sequence field. The frame control field indicates whether the relevant frame is a data frame, a control frame, or a management frame. The period/ID field indicates a network allocation vector (NAV) or an ID of a relevant station within a relevant BSS. The receiver address field indicates an address of a receiver to receive a response frame. The BSS ID field indicates an ID of the relevant BSS. The CCI length field indicates a length of a period during which a polling list is made. The frame inspection sequence field indicates frame inspection sequence according to IEEE 802 LAN standards.

Figure 7 is a diagram showing a format of an RR frame used in the present invention. The RR frame includes a frame control field, a period/ID field, a receiver address field, a BSS ID field, a QOS control field, an association ID field, and a frame inspection sequence field. The frame control field, the period/ID field, the receiver address field, the BSS ID field, and the frame inspection sequence field are the same as those in the CC frame shown in Figure 6. The QOS control field indicates a data rate, a burst size, a delay bound, and a jitter bound. The association ID field indicates an ID arbitrarily allocated by an AP within the BSS.

Figure 8 is a diagram showing a format of a poll frame used in the present invention. The poll frame includes a frame control field, a period/ID field, a receiver address field, a BSS ID field, a QOS control field, a data transmitting/receiving period length field, and a frame inspection sequence field. The frame control field, the period/ID field, the receiver address field, the BSS ID field, the QOS control field, and the frame inspection sequence field are the same as those in the CC frame shown in Figure 6 and the RR frame shown in Figure 7. The data transmitting/receiving period length field indicates a period during which the station receiving the poll frame can use a predetermined channel.

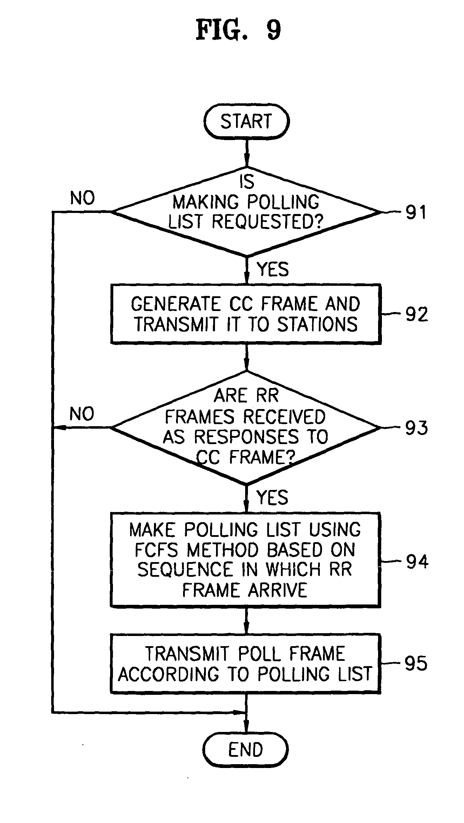

Figure 9 is a flowchart of a method of making a poling list in a coordinator, according to an embodiment of the present invention. When a polling list is not made or when all RR frames are not received from stations that have transmitted the RR frames during a CCI, making a polling list is requested (91). When making a polling list is requested, a CC frame is generated and transmitted to stations on a predetermined network through a predetermined channel using a broadcast method after a period of time corresponding to a PIFS lapses since receipt of the request of making a polling list (92). Thereafter, RR frames are received as responses to the CC frame through the predetermined channel during the CCI designated by the CC frame (93). When the RR frames are received, a poll frame transmission sequence is allocated to the stations having transmitted the RR frame, using an FCFS method based on sequence in which the RR frames arrive, and a polling list including the poll frame transmission sequence is made (94). Thereafter, a poll frame is transmitted to each station through the predetermined channel according to the poll frame transmission sequence included in the polling list (95).

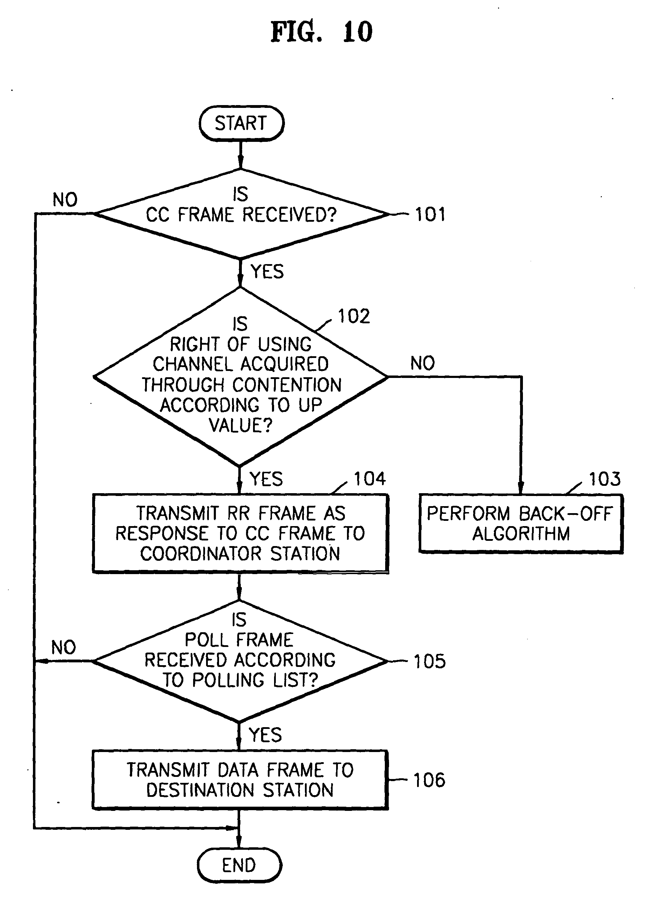

Figure 10 is a flowchart of a method of making a poling list in a station, according to the present invention. The station receives a CC frame through a predetermined channel from a coordinator station among stations on a predetermined network (101). Next, after receiving the CC frame, when the station acquires a right of exclusively using the predetermined channel through a contention according to a UP value of a data frame to transmit during a CCI designated by the received CC frame (102), the station generates an RR frame as a response to the CC frame and transmits it to the coordinator station through the predetermined channel (104). The contention for the use of the predetermined channel is performed as follows. The station sets a coordination inter-frame space value and a CW value according to the UP value and detects whether the predetermined channel is being used after a period of time corresponding to the coordination inter-frame space value and a back-off time corresponding to the CW value sequentially lapse. If the predetermined channel is not being used, the station acquires an exclusive right of using the predetermined channel. If not, the station does not acquires the exclusive right of using the predetermined channel (102) and resets the CW value to extend using a back-off algorithm (103).

A poll frame transmitted according to a poll frame transmission sequence included in the polling list is received from the coordinator station through the predetermined channel (105). Next, when the poll frame is received (105), the station transmits the data frame to a destination station among the station on the predetermined network through the predetermined channel during a data transmitting/receiving period designated by the poll frame (106).

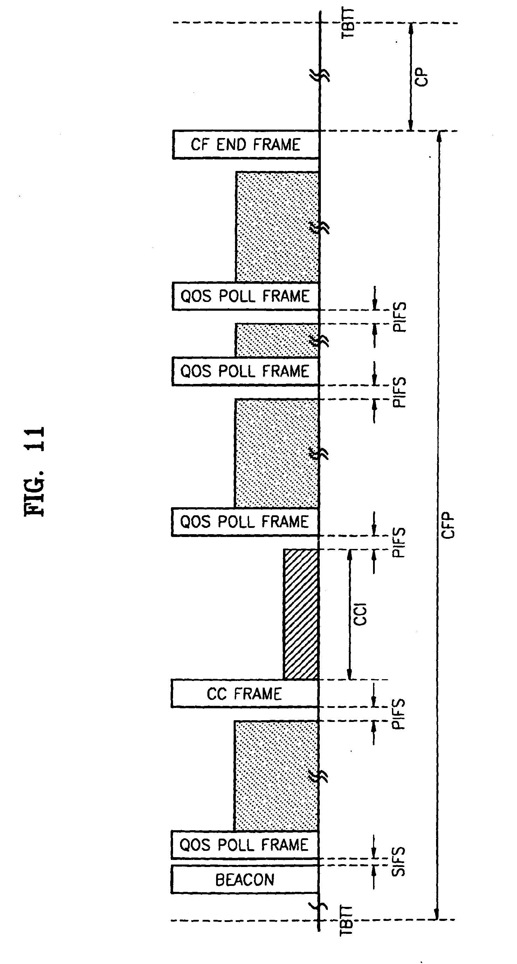

Figure 11 is a diagram showing a procedure for performing the EDCF using the present invention. According to the present invention, the EDCF supporting the QOS can be fairly and efficiently performed, as shown in Figure 11. When a coordinator station transmits a bean frame at an interval of a target beacon transmission time (TBTT), all stations in a BSS receive the beacon frame and adjust a local timer according to the beacon frame so that they are synchronized with one another. After a period of time corresponding to a SIFS lapses since the transmission of the beacon frame, the coordinator station transmits a QOS poll frame so that data transmission/reception sequence among the stations is determined. When a polling list is empty or not completed, in order to make a polling list the coordinator station transmits a CC frame to all of the stations in the BSS managed by the coordinator station. The coordinator station makes a polling list during a CCI. After a period of time corresponding to a PIFS lapses since the completion of the polling list, the coordinator station transmits a QOS poll frame to a station having data with a highest priority. The station receiving the QOS poll frame transmits a data frame during a data transmitting/receiving period and receives an ACK frame of the data frame. After the period of time corresponding to the PIFS lapses since the termination of the data transmitting/receiving period, the coordinator station transmits a QOS poll frame to a station having data with a second highest priority. Such a procedure is continued before the coordinator station transmits a contention free (CF) end frame. Thereafter, a contention period during which data is transmitted and received only through a contention for the use of a channel is continued.

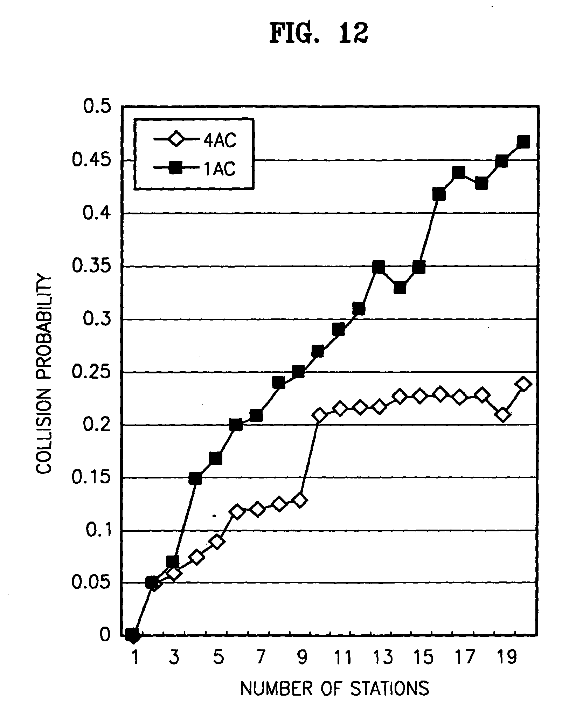

Figure 12 is a graph showing the results of simulations for evaluating the performance of the EDCF using the present invention. As shown in Figure 12, A CC/RR mechanism using the EDCF was evaluated through simulations. In order to make evaluation criteria, collision tests were performed according to the number of stations. According to IEEE 802.11a standards, logically a maximum of 256 stations can be served in a single BSS. However, physically a maximum of 20 stations can be served. The 20 stations can secure only a minimum bandwidth for data transmission. Accordingly, 15 or less stations can be actually served in a single BSS.

In the simulations, a collision probability was induced from an average CW value. The graph of Figure 12 shows the results of simulating a worst contention and a usual contention when 0 through 20 stations participated in a contention. At a low collision probability, data transmission can be guaranteed according to priority. However, if a collision occurs, a back-off is performed, and therefore, a probability that a station having a lower priority transmits an RR frame prior to a station having a higher priority increases. In Figure 12, a case where four ACs existed is compared with a case where one AC existed. The case where one AC existed showed the worst contention. In the case where four ACs existed, when the number of stations was 9, the collision probability rapidly increased. When the number of ACs increases, the collision probability decreases, but a complexity increases. Accordingly, an optimum number of stations in a single BSS is 8 through 9. For example, when 9 stations contended, the collision probability was 0.16 in the usual contention and 0.25 in the worst contention.

The above-described preferred embodiments of the present invention can be realized as programs, which can be executed in a universal digital computer through a computer readable recording medium. Data structures used in the above-described preferred embodiments can be recorded in the computer readable recording medium using various means. The computer readable recording medium may be a storage media, such as a magnetic storage medium (for example, a ROM, a floppy disc, or a hard disc), an optical readable medium (for example, a CD-ROM or DVD), or carrier waves (for example, transmitted through Internet).

According to the present invention, a QOS-supporting polling list is made, and a poll is given first to a station having data with a highest priority, so that important data can be reliably transmitted first. In addition, since a FCFS method is used, a coordinator does not need a unique algorithm used to make a polling list, and therefore, a processing burden on the coordinator is reduced. Furthermore, when the number of stations is small, the length of a CCI decreases, and therefore, a period for data transmission increases. As described above, the present invention solves the problems of the IEEE 802.11e standards and complements the IEEE 802.11e standards.

Although a few preferred embodiments have been shown and described, it will be appreciated by those skilled in the art that various changes and modifications might be made without departing from the scope of the invention, as defined in the appended claims.

## Claims

1. A coordinator polling list making apparatus (51), comprising:
a controlled contention frame transmitter (512), adapted to generate a controlled contention frame when making a polling list is requested and further adapted to transmit the controlled contention frame to stations on a network through a predetermined channel using a broadcast method;
a reservation request frame receiver (513) adapted to, receive a reservation request frame from each of the stations through the predetermined channel as a response to the controlled contention frame during a controlled contention interval designated by the controlled contention frame; and
a polling list making unit (514), adapted to allocate a poll frame transmission sequence to the stations, from which the reservation request frame is received, when the reservation request frame receiver (513) receives the reservation request frame, and further adapted to make a polling list comprising the poll frame transmission sequence;
**characterised in that** the network is a basic service set of a wireless LAN;
that the polling list making unit (514) is adapted to allocate the poll frame transmission sequence using a
first come first serve method based on a sequence in which reservation request frames arrive;
and that the controlled contention frame transmitter (512) is adapted to transmit the controlled contention frame after a period of time corresponding to a priority inter-frame space lapses since receipt of the request of making a polling list.

2. The coordinator polling list making apparatus (51) of claim 1, further comprising:
a polling frame making request unit (511) adapted to request to make the polling list when the polling list is not made or when all reservation request frames are not received from the stations having transmitted the reservation request frames during the controlled contention interval; and
a poll frame transmitter (515), adapted to transmit a poll frame to each of the stations, having transmitted the reservation request frames that are received by the reservation request frame receiver (513), through the predetermined channel according to the poll frame transmission sequence comprised in the polling list made by the polling list making unit (514).

3. The coordinator polling list making apparatus (51) of claim 2, wherein a length of the controlled contention interval is proportional to the number of stations on the network.

4. The coordinator polling list making apparatus (51) of any one of claims 1 to 3, wherein the controlled contention frame comprises a frame control field, a period/ID field, a receiver address field, a basic service set ID field, a controlled contention interval length field, and a frame inspection sequence field;
the reservation request frame comprises a frame control field, a period/ID field, a receiver address field, a basic service set ID field, a quality of service control field, an association ID field, and a frame inspection sequence field;
the poll frame comprises a frame control field, a period/ID field, a receiver address field, a basic service set ID field, a quality of service control field, a data transmitting/receiving period length field, and a frame inspection sequence field; and
the quality of service control field indicates a data rate, a burst size, a delay bound, and a jitter bound.

5. A station polling list making apparatus (52) comprising:
a controlled contention frame receiver (521), adapted to receive a controlled contention frame through a predetermined channel from a coordinator station among stations on a network; and
a reservation request frame transmitter (522) adapted to contend for use of the predetermined channel during a controlled contention interval designated by the controlled contention frame so as to acquire an exclusive right of using the predetermined channel when the controlled contention frame is received by the controlled contention frame receiver (521), adapted to generate a reservation request frame as a response to the controlled contention frame when the exclusive right is acquired, and is further adapted to transmit the reservation request frame to the coordinator station through the predetermined channel;
**characterised in that** the network is a basic service set of a wireless LAN;
that the reservation request frame transmitter is adapted to contend for use of the predetermined channel during a controlled contention interval designated by the controlled contention frame according to a user priority value of a data frame;
and that the station polling list making apparatus (52) is adapted to receive the controlled contention frame after a period of time corresponding to a priority inter-frame space lapses since receipt of a request to make a polling list from the coordinator station.

6. The station polling list making apparatus (52) of claim 5, wherein the reservation request frame transmitter (522) is adapted to set a coordination inter-frame space value and a contention window value according to the user priority value, detect whether the predetermined channel is being used after a period of time corresponding to the coordination inter-frame space value and a back-off time corresponding to the contention window value lapse, acquire the exclusive right of using the predetermined channel if the predetermined channel is not being used, and if the predetermined channel is being used not to acquire the exclusive right of using the predetermined channel and reset the contention window value to be extended using a back-off algorithm.

7. The station polling list making apparatus (52) of claim 6, further comprising:
a poll frame receiver (523), adapted to receive a poll frame transmitted through the predetermined channel from the coordinator station according to polling frame transmission sequence comprised in a polling list; and
a data frame transmitter (524), adapted to transmit the data frame to a destination station among the stations through the predetermined channel during a data transmitting/receiving period designated by the poll frame when the poll frame is received by the poll frame receiver (523).

8. The station polling list making apparatus (52) of claim 7, wherein a length of the controlled contention interval is proportional to the number of stations.

9. The station polling list making apparatus (52) of claim 8, wherein the controlled contention frame comprises a frame control field, a period/ID field, a receiver address field, a basic service set ID field, a controlled contention interval length field, and a frame inspection sequence field;
the reservation request frame comprises a frame control field, a period/ID field, a receiver address field, a basic service set ID field, a quality of service control field, an association ID field, and a frame inspection sequence field;
the poll frame comprises a frame control field, a period/ID field, a receiver address field, a basic service set ID field, a quality of service control field, a data transmitting/receiving period length field, and a frame inspection sequence field; and
the quality of service control field indicates a data rate, a burst size, a delay bound, and a jitter bound.

10. An apparatus for making a polling list, comprising:
a coordinator polling list making apparatus (51) adapted to generate a controlled contention frame when making a polling list is requested and further adapted to transmit the controlled contention frame to stations on a network through a predetermined channel using a broadcast method, and when a reservation request frame from each of the stations is received as a response to the controlled contention frame through the predetermined channel during a controlled contention interval designated by the controlled contention frame, still further adapted to allocate a poll frame transmission sequence to the stations, from which the reservation request frame is received, and yet still further adapted to make a polling list comprising the poll frame transmission sequence; and a station polling list making apparatus (52), which when the controlled contention frame is received through the predetermined channel from the coordinator polling list making apparatus (51), is adapted to contend for use of the predetermined channel during the controlled contention interval designated by the controlled contention frame so as to acquire an exclusive right of using the predetermined channel, and when the exclusive right is acquired, is further adapted to generate a reservation request frame as a response to the controlled contention frame and transmits the reservation request frame to the coordinator polling list making apparatus (51) through the predetermined channel;
**characterised in that** the network is a basic service set of a wireless LAN;
that the co-ordinator polling list making apparatus (51) is adapted to allocate the poll frame transmission sequence using a first come first serve method based on a sequence in which reservation request frames arrive; and to transmit the controlled contention frame after a period of time corresponding to a priority inter-frame space lapses since receipt of the request of making a polling list;
that the reservation request frame transmitter is adapted to contend for use of the predetermined channel during a controlled contention interval designed by the controlled contention frame according to a user priority value of a data frame;
and that the station polling list making apparatus (52) is adapted to receive the controlled contention frame after a period of time corresponding to a priority inter-frame space lapses since receipt of the request of making a polling list.

11. The apparatus of claim 10, wherein the coordinator polling list making apparatus (51) is adapted to request to make the polling list when the polling list is not made or when all reservation request frames are not received from the stations having transmitted the reservation request frames during the controlled contention interval, and is adapted transmit a poll frame to each of the stations, having transmitted the reservation request frames that are received, through the predetermined channel according to the poll frame transmission sequence comprised in the polling list; and
when the station polling list making apparatus (52) receives the poll frame transmitted through the predetermined channel from the coordinator polling list making apparatus (51) according to the polling frame transmission sequence comprised in the polling list, the station polling list making apparatus (52) is adapted to transmit the data frame to a destination station among the stations through the predetermined channel during a data transmitting/receiving period designated by the poll frame.

12. The apparatus of claim 11, wherein a length of the controlled contention interval is proportional to the number of stations.

13. The apparatus of any one of claims 10 to 12, wherein the controlled contention frame comprises a frame control field, a period/ID field, a receiver address field, a basic service set ID field, a controlled contention interval length field, and a frame inspection sequence field; the reservation request frame comprises a frame control field, a period/ID field, a receiver address field, a basic service set ID field, a quality of service control field, an association ID field, and a frame inspection sequence field;
the poll frame comprises a frame control field, a period/ID field, a receiver address field, a basic service set ID field, a quality of service control field, a data transmitting/receiving period length field, and a frame inspection sequence field; and
the quality of service control field indicates a data rate, a burst size, a delay bound, and a jitter bound.

14. A method of making a coordinator polling list, comprising:
when making a polling list is requested, generating a controlled contention frame and transmitting the controlled contention frame to stations on a network through a predetermined channel using a broadcast method;
receiving a reservation request frame from each of the stations as a response to the controlled contention frame through the predetermined channel during a controlled contention interval designated by the controlled contention frame;
when the reservation request frame is received, allocating a poll frame transmission sequence to the stations, from which the reservation request frame is received, and making a polling list comprising the poll frame transmission sequence; **characterised in that** the network is a basic service set of a wireless LAN ;
that the allocating of the poll frame transmission sequence is performed using a first come first serve method based on a sequence in which reservation request frames arrive;
and that the controlled contention frame is transmitted after a period of time corresponding to a priority inter-frame space lapses since receipt of the request of making a polling list.

15. The method of claim 14, further comprising:
requesting to make the polling list when the polling list is not made or when all reservation request frames are not received from the stations having transmitted the reservation request frames, before generating the controlled contention frame during the controlled contention interval; and
transmitting a poll frame to each of the stations, having transmitted the reservation request frames that are received, through the predetermined channel according to the poll frame transmission sequence comprised in the polling list, after making the polling list.

16. The method of claim 15, wherein a length of the controlled contention interval is proportional to the number of stations.

17. The method of any one of claims 14 to 16, wherein the controlled contention frame comprises a frame control field, a period/ID field, a receiver address field, a basic service set ID field, a controlled contention interval length field, and a frame inspection sequence field;
the reservation request frame comprises a frame control field, a period/ID field, a receiver address field, a basic service set ID field, a quality of service control field, an association ID field, and a frame inspection sequence field;
the poll frame comprises a frame control field, a period/ID field, a receiver address field, a basic service set ID field, a quality of service control field, a data transmitting/receiving period length field, and a frame inspection sequence field; and
the quality of service control field indicates a data rate, a burst size, a delay bound, and a jitter bound.

18. A method of making a station polling list, comprising:
(a) receiving a controlled contention frame through a predetermined channel from a coordinator station among stations on a network; and
(b) when the controlled contention frame is received, contending for use of the predetermined channel during a controlled contention interval designated by the controlled contention frame so as to acquire an exclusive right of using the predetermined channel, generating a reservation request frame as a response to the controlled contention frame when the exclusive right is acquired, and transmitting the reservation request frame to the coordinator station through the predetermined channel ;
**characterised in that in that** the network is a basic service set of a wireless LAN;
that in step (b) the contention for use of the predetermined channel is performed according to a user priority value of a data frame; and
that in step (a) the controlled contention frame is received after a period of time corresponding to a priority inter-frame space lapses.

19. The method of claim 18, wherein step (b) comprises setting a coordination inter-frame space value and a contention window value according to the user priority value, detecting whether the predetermined channel is being used after a period of time corresponding to the coordination inter-frame space value and a back-off time corresponding to the contention window value sequentially lapse, acquiring the exclusive right of using the predetermined channel if the predetermined channel is not being used, and resetting the contention window value to be extended using a back-off algorithm when the exclusive right of using the predetermined channel is not acquired because the predetermined channel is being used.

20. The method of claim 18 or 19, further comprising:
(c) receiving a poll frame transmitted through the predetermined channel from the coordinator station according to polling frame transmission sequence comprised in a polling list; and
(d) when the poll frame is received, transmitting the data frame to a destination station among the stations through the predetermined channel during a data transmitting/receiving period designated by the poll frame.

21. The method of claim 20, wherein a length of the controlled contention interval is proportional to the number of stations.

22. The method of any one of claims 18 to 21, wherein the controlled contention frame comprises a frame control field, a period/ID field, a receiver address field, a basic service set ID field, a controlled contention interval length field, and a frame inspection sequence field;
the reservation request frame comprises a frame control field, a period/ID field, a receiver address field, a basic service set ID field, a quality of service control field, an association ID field, and a frame inspection sequence field;
the poll frame comprises a frame control field, a period/ID field, a receiver address field, a basic service set ID field, a quality of service control field, a data transmitting/receiving period length field, and a frame inspection sequence field; and
the quality of service control field indicates a data rate, a burst size, a delay bound, and a jitter bound.

23. A method of making a polling list, comprising:
(a) when making a polling list is requested, generating a controlled contention frame and transmitting the controlled contention frame to stations on a network through a predetermined channel using a broadcast method, and when a reservation request frame from each of the stations is received as a response to the controlled contention frame through the predetermined channel during a controlled contention interval designated by the controlled contention frame, allocating a poll frame transmission sequence to the stations, from which the reservation request frame is received, and making a polling list comprising the poll frame transmission sequence; and
(b) when the controlled contention frame is received through the predetermined channel, contending for use of the predetermined channel during the controlled contention interval designated by the controlled contention frame so as to acquire an exclusive right of using the predetermined channel, and when the exclusive right is acquired, generating a reservation request frame as a response to the controlled contention frame and transmitting the reservation request frame to the coordinator polling list making apparatus (51) through the predetermined channel; **characterised in that** the network is a basic service set of a wireless LAN;
that in step (a) the poll frame transmission sequence is allocated using a first come first serve method based on a sequence in which reservation request frames arrive; and that the controlled contention frame is transmitted after a period of time corresponding to a priority inter-frame space lapses since receipt of the request of making a polling list; and
that in step (b) the contention for use of the predetermined channel is performed according to a user priority value of a data frame.

24. The method of claim 23, wherein step (a) comprises requesting to make the polling list when the polling list is not made or when all reservation request frames are not received from the stations having transmitted the reservation request frames during the controlled contention interval, and transmitting a poll frame to each of the stations, having transmitted the reservation request frames that are received, through the predetermined channel according to the poll frame transmission sequence comprised in the polling list; and
step (b) comprises when the poll frame transmitted through the predetermined channel according to the polling frame transmission sequence comprised in the polling list is received, transmitting the data frame to a destination station among the stations through the predetermined channel during a data transmitting/receiving period designated by the poll frame.

25. The method of claim 29, wherein a length of the controlled contention interval is proportional to the number of stations.

26. The method of any one of claims 23 to 25, wherein the controlled contention frame comprises a frame control field, a period/ID field, a receiver address field, a basic service set ID field, a controlled contention interval length field, and a frame inspection sequence field;
the reservation request frame comprises a frame control field, a period/ID field, a receiver address field, a basic service set ID field, a quality of service control field, an association ID field, and a frame inspection sequence field;
the poll frame comprises a frame control field, a period/ID field, a receiver address field, a basic service set ID field, a quality of service control field, a data transmitting/receiving period length field, and a frame inspection sequence field; and
the quality of service control field indicates a data rate, a burst size, a delay bound, and a jitter bound.

27. A computer readable recording medium **characterised by** having embodied therein a computer program for performing the method of any of claims 14 to 17.

28. A computer readable recording medium **characterised by** having embodied therein a computer program for performing the method of any of claims 18 to 22.

29. A computer readable recording medium **characterised by** having embodied therein a computer program for performing the method of any of claims 23 to 26.

## Patentansprüche

1. Vorrichtung zum Erstellen von Koordinator-Abfragelisten (51), umfassend:
einen Sender für gesteuerte Konkurrenzrahmen bzw. Contention-Frames (512), der so ausgelegt ist, dass er einen gesteuerten Contention-Frame generiert, wenn das Erstellen einer Abfrageliste angefordert wird, und des Weiteren so ausgelegt ist, dass er den gesteuerten Contention-Frame zu Stationen auf einem Netzwerk über einen vorbestimmten Kanal unter Verwendung eines Rundsendeverfahrens sendet;
einen Empfänger für Reservierungsanforderungsrahmen bzw. Reservierungsanforderungs-Frames (513), der so ausgelegt ist, dass er einen Reservierungsanforderungs-Frame von jeder der Stationen über den vorbestimmten Kanal als eine Antwort auf den gesteuerten Contention-Frame während eines gesteuerten Contenfion-Intervalls empfängt, das von dem gesteuerten Contention-Frame bestimmt wird; und
eine Einheit zum Erstellen von Abfragelisten (514), die so ausgelegt ist, dass sie eine Abfragerahmen- bzw. Poll-Frame-Sendefolge den Stationen zuweist, von denen der Reservierungsanforderungs-Frame erhalten wird, wenn der Empfänger für Reservierungsanforderungs-Frames (513) den Reservierungsanforderungs-Frame empfängt, und des Weiteren so ausgelegt ist, dass eine Abfrageliste erstellt wird, die die Poll-Frame-Sendefolge enthält;
**dadurch gekennzeichnet, dass** das Netzwerk eine Grund-Dienstgruppe (basic service set) eines drahtlosen LAN ist;
dass die Einheit zum Erstellen von Abfragelisten (514) so ausgelegt ist, dass sie die Poll-Frame-Sendefolge unter Verwendung eines FIFO-Verfahrens basierend auf einer Folge, in der Reservierungsanforderungs-Frames ankommen, zuweist;
und dass der Sender für gesteuerte Contention-Frames (512) so ausgelegt ist, dass er den gesteuerten Contention-Frame nach einer Zeitperiode sendet, die Abläufen eines Prioritätszeitraums zwischen Frames (priority inter-frame space lapses) seit dem Empfang der Anforderung zum Erstellen einer Abfrageliste entspricht.

2. Vorrichtung zum Erstellen von Koordinator-Abfragelisten (51) nach Anspruch 1, des Weiteren umfassend:
eine Erstellungsanforderungseinheit für Polling-Frames (511), die so ausgelegt ist, dass sie das Erstellen der Abfrageliste anfordert, wenn die Abfrageliste nicht erstellt ist oder wenn alle Reservierungsanforderungs-Frames nicht von den Stationen empfangen werden, die die Reservierungsanforderungs-Frames während des gesteuerten Contention-Intervalls gesendet haben; und
einen Poll-Frame-Sender (151), der so ausgelegt ist, dass er einen Poll-Frame an jede der Stationen, die die Reservierungsanforderungs-Frames gesendet haben, die von dem Empfänger für Reservierungsanforderungs-Frames (513) empfangen werden, über den vorbestimmten Kanal gemäß der Poll-Frame-Sendefolge sendet, die in der Abfrageliste enthalten ist, die von der Einheit zum Erstellen von Abfragelisten (514) erstellt wurde.

3. Vorrichtung zum Erstellen von Koordinator-Abfragelisten (51) nach Anspruch 2, wobei eine Länge des gesteuerten Contention-Intervalls proportional zu der Anzahl von Stationen auf dem Netzwerk ist.

4. Vorrichtung zum Erstellen von Koordinator-Abfragelisten (51) nach einem beliebigen der Ansprüche 1 bis 3, wobei der gesteuerte Contention-Frame ein Frame-Steuerfeld, ein Perioden/ID-Feld, ein Empfängeradressfeld, ein Grund-Dienstgruppen-ID-Feld, ein Feld für gesteuerte Contention-Intervalllänge und ein Frame-Prüffolge-Feld umfasst;
der Reservierungsanforderungs-Frame ein Frame-Steuerfeld, ein Perioden/ID-Feld, ein Empfängeradressfeld, ein Grund-Dienstgruppen-ID-Feld, ein Dienstgüte-Steuerfeld, ein Assoziations-ID-Feld und ein Frame-Prüffolge-Feld umfasst;
der Poll-Frame ein Frame-Steuerfeld, ein Perioden/ID-Feld, ein Empfängeradressfeld, ein Grund-Dienstgruppen-ID-Feld, ein Dienstgüte-Steuerfeld, ein Daten-Sende/Empfangsperiodenlänge-Feld und ein Frame-Prüffolge-Feld umfasst; und
das Dienstgüte-Steuerfeld eine Datenübertragungsrate, eine Burstgröße, eine Verzögerungsgrenze und eine Jittergrenze angibt.

5. Vorrichtung zum Erstellen von Stations-Abfragelisten (52), umfassend:
einen Empfänger für gesteuerte Contention-Frames (521), der so ausgelegt ist, dass er einen gesteuerten Contention-Frame über einen vorbestimmten Kanal von einer Koordinator-Station von den Stationen auf einem Netzwerk empfängt; und;
einen Sender für Reservierungsanforderungs-Frames (522), der so ausgelegt ist, dass er für die Verwendung des vorbestimmten Kanals während eines gesteuerten Contention-Intervalls, das durch den gesteuerten Contention-Frame bestimmt wird, so in Wettbewerb steht, dass er ein Exklusivrecht für die Verwendung des vorbestimmten Kanals erhält, wenn der gesteuerte Contention-Frame von dem Empfänger für gesteuerte Contention-Frames (521) empfangen wird, der so ausgelegt ist, dass er einen Reservierungsanforderungs-Frame als eine Antwort auf den gesteuerten Contention-Frame generiert, wenn das Exklusivrecht erhalten wurde, und des Weiteren so ausgelegt ist, dass er den Reservierungsanforderungs-Frame über den vorbestimmten Kanal an die Koordinator-Station sendet;
**dadurch gekennzeichnet, dass** das Netzwerk eine Grund-Dienstgruppe eines drahtlosen LAN ist;
dass der Sender für Reservierungsanforderungs-Frames so ausgelegt ist, dass er für die Verwendung des vorbestimmten Kanals während eines gesteuerten Contention-Intervalls, das durch den gesteuerten Contention-Frame bestimmt wird, gemäß einem Benutzerprioritätswert eines Datenrahmens in Wettbewerb steht;
und dass die Vorrichtung zum Erstellen von Stations-Abfragelisten (52) so ausgelegt ist, dass sie den gesteuerten Contention-Frame nach einer Zeitperiode empfängt, die Abläufen eines Prioritätszeitraums zwischen Frames seit dem Empfang der Anforderung zum Erstellen einer Abfrageliste von der Koordinator-Station entspricht.

6. Vorrichtung zum Erstellen von Stations-Abfragelisten (52) nach Anspruch 5, wobei der Sender für Reservierungsanforderungs-Frames (522) so ausgelegt ist, dass er einen Koordinationswert für Frame-Zwischenräume (coordination inter-frame space value) und einen Contention-Fensterwert gemäß dem Benutzerprioritätswert einrichtet, erfasst, ob der vorbestimmte Kanal nach einer Zeitperiode, die dem Koordinationswert für Frame-Zwischenräume entspricht, und einer Leistungsreduzierungszeit (back-off time), die dem Ablauf des Contention-Fensterwerts entspricht, verwendet wird, das Exklusivrecht zur Verwendung des vorbestimmten Kanals erhält, wenn der vorbestimmte Kanal nicht verwendet wird, und wenn der vorbestimmte Kanal verwendet wird, das Exklusivrecht zur Verwendung des vorbestimmten Kanals nicht erhält, und den zu erweiternden Contention-Fensterwert unter Verwendung eines Leistungsreduzierungs-Algorithmus zurücksetzt.

7. Vorrichtung zum Erstellen von Stations-Abfragelisten (52) nach Anspruch 6, des Weiteren umfassend:
einen Poll-Frame-Empfänger (523), der so ausgelegt ist, dass er einen Poll-Frame empfängt, der über den vorbestimmten Kanal von der Koordinator-Station gemäß einer Polling-Frame-Sendefolge, die in einer Abfrageliste enthalten ist, gesendet wurde; und
einen Datenrahmen-Sender (524), der so ausgelegt ist, dass er den Datenrahmen zu einer Zielstation von den Stationen über den vorbestimmten Kanal während einer Daten-Sende/Empfangsperiode sendet, die durch den Poll-Frame bestimmt wird, wenn der Poll-Frame von dem Poll-Frame-Empfänger (523) empfangen wird.

8. Vorrichtung zum Erstellen von Stations-Abfragelisten (52) nach Anspruch 7, wobei eine Länge des gesteuerten Contention-Intervalls proportional zu der Anzahl von Stationen ist.

9. Vorrichtung zum Erstellen von Stations-Abfragelisten (52) nach Anspruch 8, wobei der gesteuerte Contention-Frame ein Frame-Steuerfeld, ein Perioden/ID-Feld, ein Empfängeradressfeld, ein Grund-Dienstgruppen-ID-Feld, ein Feld für gesteuerte Contention-Intervalllänge und ein Frame-Prüffolge-Feld umfasst;
der Reservierungsanforderungs-Frame ein Frame-Steuerteld, ein Perioden/ID-Feld, ein Empfängeradressfeld, ein Grund-Dienstgruppen-ID-Feld, ein Dienstgüte-Steuerfeld, ein Assoziations-ID-Feld und ein Frame-Prüffolge-Feld umfasst;
der Poll-Frame ein Frame-Steuerfeld, ein Perioden/ID-Feld, ein Empfängeradressfeld, ein Grund-Dienstgruppen-ID-Feld, ein Dienstgüte-Steuerfeld, ein Daten-Sende/Empfangsperiodenlänge-Feld und ein Frame-Prüffolge-Feld umfasst; und
das Dienstgüte-Steuerfeld eine Datenübertragungsrate, eine Burstgröße, eine Verzögerungsgrenze und eine Jittergrenze angibt.

10. Vorrichtung zum Erstellen von Abfragelisten, umfassend:
eine Vorrichtung zum Erstellen von Koordinator-Abfragelisten (51), die so ausgelegt ist, dass sie einen gesteuerten Contention-Frame generiert, wenn das Erstellen einer Abfrageliste angefordert wird, und des Weiteren so ausgelegt ist, dass sie den gesteuerten Contention-Frame unter Verwendung eines Rundsendeverfahrens zu Stationen auf einem Netzwerk über einen vorbestimmten Kanal und
wenn ein Reservierungsanforderungs-Frame von jeder der Stationen als eine Antwort auf den gesteuerten Contention-Frame über den vorbestimmten Kanal während eines gesteuerten Contention-Intervalls, das durch den gesteuerten Contention-Frame bestimmt wird, empfangen wird, sendet, des Weiteren so ausgelegt ist, dass sie eine Poll-Frame-Sendefolge zu den Stationen zuweist, von denen der Reservierungsanforderungs-Frame empfangen wurde, und des Weiteren so ausgelegt ist, dass sie eine Abfrageliste erstellt, welche die Poll-Frame-Sendefolge enthält; und eine Vorrichtung zum Erstellen von Stations-Abfragelisten (52), die so ausgelegt ist, dass sie, wenn der gesteuerte Contention-Frame über den vorbestimmten Kanal von der Vorrichtung zum Erstellen von Koordinator-Abfragelisten (51) empfangen wird, für die Verwendung des vorbestimmten Kanals während des gesteuerten Contention-Intervalls, das durch den gesteuerten Contention-Frame bestimmt wird, so in Wettbewerb steht, dass sie ein Exklusivrecht für die Verwendung des vorbestimmten Kanals erhält, und wenn das Exklusivrecht erhalten wurde des Weiteren so ausgelegt ist, dass sie einen Reservierungsanforderungs-Frame als eine Antwort auf den gesteuerten Contention-Frame generiert und den Reservierungsanforderungs-Frame über den vorbestimmten Kanal an die Vorrichtung zum Erstellen von Koordinator-Abfragelisten (51) sendet;
**dadurch gekennzeichnet, dass** das Netzwerk eine Grund-Dienstgruppe eines drahtlosen LAN ist;
dass die Vorrichtung zum Erstellen von Koordinator-Abfragelisten (51) so ausgelegt, ist, dass sie die Poll-Frame-Sendefolge unter Verwendung eines FIFO-Verfahrens basierend auf einer Folge, in der Reservierungsanforderungs-Frames ankommen, zuweist; und dass sie den gesteuerten Contention-Frame nach einer Zeitperiode sendet, die Abläufen eines Prioritätszeitraums zwischen Frames seit dem Empfang der Anforderung zum Erstellen einer Abfrageliste entspricht;
dass der Sender für Reservierungsanforderungs-Frames so ausgelegt ist, dass er für die Verwendung des vorbestimmten Kanals während eines gesteuerten Contention-Intervalls, das durch den gesteuerten Contention-Frame bestimmt wird, gemäß einem Benutzerprioritätswert eines Datenrahmens in Wettbewerb steht;
und dass die Vorrichtung zum Erstellen von Stations-Abfragelisten (52) so ausgelegt ist, dass sie den gesteuerten Contention-Frame nach einer Zeitperiode empfängt, die Abläufen eines Prioritätszeitraums zwischen Frames seit dem Empfang der Anforderung zum Erstellen einer Abfrageliste von der Koordinator-Station entspricht.

11. Vorrichtung nach Anspruch 10, wobei die Vorrichtung zum Erstellen von Koordinator-Abfragelisten (51) so ausgelegt ist, dass sie die Erstellung einer Abfrageliste anfordert, wenn die Abfrageliste nicht erstellt ist oder wenn alle Reservierungsanforderungs-Frames nicht von den Stationen empfangen werden, die die Reservierungsanforderungs-Frames während des gesteuerten Contention-Intervalls gesendet haben, und ist so ausgelegt, dass sie ein Poll-Frame zu jeder der Stationen sendet, die die Reservierungsanforderungs-Frames, die empfangen werden, über den vorbestimmten Kanal gemäß der Poll-Frame-Sendefolge gesendet haben, die in der Abfrageliste enthalten ist; und
wenn die Vorrichtung zum Erstellen von Stations-Abfragelisten (52) den Poll-Frame empfängt, der über den vorbestimmten Kanal von der Vorrichtung zum Erstellen von Koordinator-Abfragelisten (51) gemäß der Polling-Frame-Sendefolge, die in der Abfrageliste enthalten ist, gesendet worden ist, ist die Vorrichtung zum Erstellen von Stations-Abfragelisten (52) so ausgelegt, dass sie den Datenrahmen während einer Sende/Empfangsperiode, die von dem Poll-Frame bestimmt wird, über den vorbestimmten Kanal zu einer Zielstation von den Stationen sendet.

12. Vorrichtung nach Anspruch 11, wobei eine Länge des gesteuerten Contention-Intervalls proportional zu der Anzahl von Stationen ist.

13. Vorrichtung nach einem beliebigen der Ansprüche 10 bis 12, wobei der gesteuerte Contention-Frame ein Frame-Steuerfeld, ein Perioden/ID-Feld, ein Empfängeradressfeld, ein Grund-Dienstgruppen-ID-Feld, ein Feld für gesteuerte Contention-Intervalllänge und ein Frame-Prüffolge-Feld umfasst;
der Reservierungsanforderungs-Frame ein Frame-Steuerfeld, ein Perioden/ID-Feld, ein Empfängeradressfeld, ein Gnind-Dienstgruppen-ID-Feld, ein Dienstgüte-Steuerfeld, ein Assoziations-ID-Feld und ein Frame-Prüffolge-Feld umfasst;
der Poll-Frame ein Frame-Steuerfeld, ein Perioden/ID-Feld, ein Empfängeradressfeld, ein Grund-Dienstgruppen-ID-Feld, ein Dienstgüte-Steuerfeld, ein Daten-Sende/Empfangsperiodenlänge-Feld und ein Frame-Prüffolge-Feld umfasst; und
das Dienstgüte-Steuerfeld eine Datenübertragungsrate, eine Burstgröße, eine Verzögerungsgrenze und eine Jittergrenze angibt.

14. Verfahren zum Erstellen einer Koordinator-Abfrageliste, umfassend:
wenn das Erstellen einer Abfrageliste angefordert wird, Generieren eines gesteuerten Contention-Frame und Senden des gesteuerten Contention-Frame an Stationen auf einem Netzwerk über einen vorbestimmten Kanal unter Verwendung eines Rundsendeverfahrens;
Empfangen eines Reservierungsanforderungs-Frame von jeder der Stationen als eine Antwort auf den gesteuerten Contention-Frame über den vorbestimmten Kanal während eines gesteuerten Contention-Intervalls, das von dem gesteuerten Contention-Frame bestimmt wird;
wenn der Reservierungsanforderungs-Frame empfangen wird, Zuweisen einer Poll-Frame-Sendefolge zu den Stationen, von denen der Reservierungsanforderungs-Frame empfangen wird, und Erstellen einer Abfrageliste, die die Poll-Frame-Sendefolge enthält;
**dadurch gekennzeichnet, dass** das Netzwerk eine Grund-Dienstgruppe eines drahtlosen LAN ist;
dass das Zuweisen der Poll-Frame-Sendefolge unter Verwendung eines FIFO-Verfahrens basierend auf einer Folge, in der Reservierungsanforderungs-Frames ankommen, durchgeführt wird;
und dass der gesteuerte Contention-Frame nach einer Zeitperiode gesendet wird, die Abläufen eines Prioritätszeitraums zwischen Frames seit dem Empfang der Anforderung zum Erstellen einer Abfrageliste entspricht.

15. Verfahren nach Anspruch 14, des Weiteren umfassend:
Anfordern der Erstellung der Abfrageliste, wenn die Abfrageliste nicht erstellt ist oder wenn alle Reservierungsanforderungs-Frames nicht von den Stationen empfangen werden, die die Reservienrngsanforderungs-Frames gesendet haben, bevor der gesteuerte Contention-Frame während des gesteuerten Contention-Intervalls generiert wird; und
Senden eines Poll-Frame zu jeder der Stationen, die die Reservierungsanforderungs-Frames gesendet haben, die über den vorbestimmten Kanal gemäß der Poll-Frame-Sendefolge, die in der Abfrageliste enthalten ist, empfangen werden, nachdem die Abfrageliste erstellt wurde.

16. Verfahren nach Anspruch 15, wobei eine Länge des gesteuerten Contention-Intervalls proportional zu der Anzahl von Stationen ist.

17. Verfahren nach einem beliebigen der Ansprüche 14 bis 16, wobei der gesteuerte Contention-Frame ein Frame-Steuerfeld, ein Perioden/ID-Feld, ein Empfängeradressfeld, ein Grund-Dienstgruppen-ID-Feld, ein Feld für gesteuerte Contention-Intervallfänge und ein Frame-Prüffolge-Feld umfasst;
der Reservierungsanforderungs-Frame ein Frame-Steuerfeld, ein Periode/ID-Feld, ein Empfängeradressfeld, ein Grund-Dienstgruppen-ID-Feld, ein Dienstgüte-Steuerfeld, ein Assoziations-ID-Feld und ein Frame-Prüffolge-Feld umfasst;
der Poll-Frame ein Frame-Steuerfeld, ein Perioden/ID-Feld, ein Empfängeradressfeld, ein Grund-Dienstgruppen-ID-Feld, ein Dienstgüte-Steuerfeld, ein Daten-Sende/Empfangsperiodenlänge-Feld und ein Frame-Prüffolge-Feld umfasst; und
das Dienstgüte-Steuerfeld eine Datenübertragungsrate, eine Burstgröße, eine Verzögerungsgrenze und eine Jittergrenze angibt.

18. Verfahren zum Erstellen einer Stations-Abfrageliste, umfassend:
(a) Empfangen eines gesteuerten Contention-Frame über einen vorbestimmten Kanal von einer Koordinator-Station von Stationen auf einem Netzwerk; und
(b) wenn der gesteuerte Contention-Frame empfangen wird, in Wettbewerb treten für die Verwendung des vorbestimmten Kanals während eines gesteuerten Contention-Intervalls, das durch den gesteuerten Contention-Frame so bestimmt wird, dass ein Exklusivrecht für die Verwendung des vorbestimmten Kanals erhalten wird, Generieren eines Reservierungsanforderungs-Frame als eine Antwort auf den gesteuerten Contention-Frame, wenn das Exklusivrecht erhalten wurde, und Senden des Reservierungsanforderungs-Frame über den vorbestimmten Kanal;
**dadurch gekennzeichnet, dass** das Netzwerk eine Grund-Dienstgruppe eines drahtlosen LAN ist;
dass in Schritt (b) der Wettbewerb für die Verwendung des vorbestimmten Kanals gemäß einem Benutzerprioritätswert eines Datenrahmens durchgeführt wird; und
dass in Schritt (a) der gesteuerte Contention-Frame nach einer Zeitperiode empfangen wird, die Abläufen eines Prioritätszeitraums zwischen Frames entspricht.

19. Verfahren nach Anspruch 18, wobei Schritt (b) das Einrichten eines Koordinationswerts für Frame-Zwischenräume und eines Contention-Fensterwerts gemäß dem Benutzerprioritätswert, das Erfassen, ob der vorbestimmte Kanal verwendet wird, nachdem eine Zeitperiode, die dem Koordinationswert für Frame-Zwischenräume entspricht, und eine Leistungsreduzierungszeit, die dem Ablauf des Contention-Fensterwerts entspricht, nacheinander abgefaufen ist, das Erhalten des Exklusivrechts zur Verwendung des vorbestimmten Kanals, wenn der vorbestimmte Kanal nicht verwendet wird, und das Rücksetzen des zu erweiternden Contention-Fensterwerts unter Verwendung eines Leistungsreduzierungs-Algorithmus, wenn das Exklusivrecht zur Verwendung des vorbestimmten Kanals nicht erhalten wurde, weil der vorbestimmte Kanal verwendet wird, umfasst.

20. Verfahren nach Anspruch 18 oder 19, des Weiteren umfassend:
(c) Empfangen eines Poll-Frame, der über den vorbestimmten Kanal von der Koordinator-Station gemäß einer Polling-Frame-Sendefolge, die in einer Abfrageliste enthalten ist, gesendet wurde; und
(d) wenn der gesteuerte Contention-Frame empfangen wird, Senden des Datenrahmens zu einer Zielstation von den Stationen über den vorbestimmten Kanal während einer Daten-Sende/Empfangsperiode, die durch den Poll-Frame bestimmt wird;

21. Verfahren nach Anspruch 20, wobei eine Länge des gesteuerten Contention-Intervalls proportional zu der Anzahl von Stationen ist.

22. Verfahren nach einem beliebigen der Ansprüche 18 bis 21, wobei der gesteuerte Contention-Frame ein Frame-Steuerfeld, ein Perioden/ID-Feld, ein Empfängeradressfeld, ein Grund-Dienstgruppen-ID-Feld, ein Feld für gesteuerte Contention-Intervalllänge und ein Frame-Prüffolge-Feld umfasst;
der Reservierungsanforderungs-Frame ein Frame-Steuerfeld, ein Periode/ID-Feld, ein Empfängeradressfeld, ein Grund-Dienstgruppen-ID-Feld, ein Dienstgüte-Steuerfeld, ein Assoriations-ID-Feld und ein Frame-Prüffolge-Feld umfasst;
der Poll-Frame ein Frame-Steuerfeld, ein Perioden/ID-Feld, ein Empfängeradressfeld, ein Grund-Dienstgruppen-ID-Feld, ein Dienstgüte-Steuerfeld, ein Daten-Sende/Empfangsperiodenlänge-Feld und ein Frame-Prüffolge-Feld umfasst; und
das Dienstgüte-Steuerfeld eine Datenübertragungsrate, eine Burstgröße, eine Verzögerungsgrenze und eine Jittergrenze angibt.

23. Verfahren zum Erstellen einer Abfrageliste, umfassend:
(a) wenn das Erstellen einer Abfrageliste angefordert wird, Generieren eines gesteuerten Contention-Frame und Senden des gesteuerten Contention-Frame zu Stationen auf einem Netzwerk über einen vorbestimmten Kanal unter Verwendung eines Rundsendeverfahrens, und wenn ein Reservierungsanforderungs-Frame von jeder der Stationen als eine Antwort auf den gesteuerten Contention-Frame über den vorbestimmten Kanal während eines gesteuerten Contention-Intervalls, das durch den gesteuerten Contention-Frame bestimmt wird, empfangen wird, Zuweisen einer Poll-Frame-Sendefolge zu den Stationen, von denen der Reservierungsanforderungs-Frame empfangen wird, und Erstellen einer Abfrageliste, die die Poll-Frame-Sendefolge enthält; und
(b) wenn der gesteuerte Contention-Frame über den vorbestimmten Kanal empfangen wird, in Wettbewerb treten für die Verwendung des vorbestimmten Kanals während des gesteuerten Contention-Intervalls, das durch den gesteuerten Contention-Frame so bestimmt wird, dass ein Exklusivrecht für die Verwendung des vorbestimmten Kanals erhalten wird, und wenn das Exklusivrecht erhalten wurde, Generieren eines Reservierungsanforderungs-Frame als eine Antwort auf den gesteuerten Contention-Frame und Senden des Reservierungsanforderungs-Frame an die Vorrichtung zum Erstellen von Koordinator-Abfragelisten (51) über den vorbestimmten Kanal;
**dadurch gekennzeichnet, dass** das Netzwerk eine Grund-Dienstgruppe eines drahtlosen LAN ist;
dass in Schritt (a) die Poll-Frame-Sendefolge unter Verwendung eines FI-FO-Verfahrens basierend auf einer Folge, in der Reservierungsanforderungs-Frames ankommen, zugewiesen wird; und dass der gesteuerte Contention-Frame nach einer Zeitperiode gesendet wird, die Abläufen eines Prioritätszeitraums zwischen Frames seit dem Empfang der Anforderung zum Erstellen einer Abfrageliste entspricht; und
dass in Schritt (b) der Wettbewerb für die Verwendung des vorbestimmten Kanals gemäß einem Benutzerprioritätswert eines Datenrahmens durchgeführt wird.

24. Verfahren nach Anspruch 23, wobei Schritt (a) das Anfordern der Erstellung der Abfrageliste, wenn die Abrufliste nicht erstellt ist oder wenn nicht alle Reservierungsanforderungs-Frames von den Stationen empfangen werden, die die Reservierungsanforderungs-Frames während des gesteuerten Contention-Intervalls gesendet haben, und das Senden des Poll-Frame zu jeder der Stationen, die die Reservierungsanforderungs-Frames, die empfangen werden, über den vorbestimmten Kanal gemäß der Poll-Frame-Sendefolge gesendet haben, die in der Abfrageliste enthalten ist, umfasst; und
Schritt (b), wenn der Poll-Frame empfangen wurde, der über den vorbestimmten Kanal gemäß der Polling-Frame-Sendefolge, die in der Abfrageliste enthalten ist, gesendet worden ist, das Senden des Datenrahmens zu einer Zielstation von den Stationen über den vorbestimmten Kanal während einer Sende/Empfangsperiode umfasst, die von dem Poll-Frame bestimmt wird.

25. Verfahren nach Anspruch 24, wobei die Länge des gesteuerten Contention-Intervalls proportional zu der Anzahl von Stationen ist.

26. Verfahren nach einem beliebigen der Ansprüche 23 bis 25, wobei der gesteuerte Contention-Frame ein Frame-Steuerfeld, ein Perioden/ID-Feld, ein Empfängeradressfeld, ein Grund-Dienstgruppen-ID-Feld, ein Feld für gesteuerte Contention-Intervalilänge und ein Frame-Prüffolge-Feld umfasst;
der Reservierungsanforderungs-Frame ein Frame-Steuerfeld, ein Perioden/ID-Feld, ein Empfängeradressfeld, ein Grund-Dienstgruppen-ID-Feld, ein Dienstgüte-Steuerfeld, ein Assoziations-ID-Feld und ein Frame-Prüffolge-Feld umfasst;
der Poll-Frame ein Frame-Steuerfeld, ein Perioden/ID-Feld, ein Empfängeradressfeld, ein Grund-Dienstgruppen-ID-Feld, ein Dienstgüte-Steuerfeld, ein Daten-Sende/Empfangsperiodenlänge-Feld und ein Frame-Prüffolge-Feld umfasst; und
das Dienstgüte-Steuerfeld eine Datenübertragungsrate, eine Burstgröße, eine Verzögerungsgrenze und eine Jittergrenze angibt.

27. Computerlesbares Aufzeichnungsmedium, **dadurch gekennzeichnet, dass** es ein darin integriertes Computerprogramm zum Durchführen des Verfahrens nach einem beliebigen der Ansprüche 14 bis 17 aufweist.

28. Computerlesbares Aufzeichnungsmedium, **dadurch gekennzeichnet, dass** es ein darin integriertes Computerprogramm zum Durchführen des Verfahrens nach einem beliebigen der Ansprüche 18 bis 22 aufweist.

29. Computerlesbares Aufzeichnungsmedium, **dadurch gekennzeichnet, dass** es ein darin integriertes Computerprogramm zum Durchführen des Verfahrens nach einem beliebigen der Ansprüche 23 bis 26 aufweist.

## Revendications

1. Dispositif de création de liste d'interrogation de coordinateur (51), comprenant :
un émetteur de trame de contention commandée (512), adapté pour générer une trame de contention commandée lorsque la création d'une liste d'interrogation est demandée et en outre adapté pour transmettre la trame de contention commandée à des stations sur un réseau à travers un canal prédéterminé en utilisant un procédé de diffusion;
un récepteur de trame de demande de réservation (513), adapté pour recevoir une trame de demande de réservation pour chacune des stations à travers le canal prédéterminé en réponse à la trame de contention commandée pendant un intervalle de contention commandée désigné par la trame de contention commandée; et
une unité de création de liste d'interrogation (514), adaptée pour attribuer une séquence de transmission de trame d'interrogation aux stations à partir desquelles la trame de demande de réservation est reçue, lorsque le récepteur de trame de demande de réservation (513) reçoit la trame de demande de réservation, et en outre adaptée pour créer une liste d'interrogation comprenant la séquence de transmission de trame d'interrogation ;
**caractérisé en ce que** le réseau est un ensemble de services basiques d'un LAN sans fil ;
**en ce que** l'unité de création de liste d'interrogation (514) est adaptée pour attribuer la séquence de transmission de trame d'interrogation en utilisant un procédé premier arrivé - premier servi basé sur une séquence dans laquelle les trames de demande de réservation arrivent ;
et **en ce que** l'émetteur de trame de contention commandée (512) est adapté pour transmettre la trame de contention commandée après qu'une période correspondant à un espace inter-trame de priorité prend fin depuis la réception de la demande de création d'une liste d'interrogation.

2. Dispositif de création de liste d'interrogation de coordinateur (51) selon la revendication 1, comprenant en outre:
une unité de demande de création de trame d'interrogation (511) adaptée pour demander la création de la liste d'interrogation lorsque la liste d'interrogation n'est pas créée ou lorsque toutes les trames de demande de réservation ne sont pas reçues des stations ayant transmis les trames de demande de réservation pendant l'intervalle de contention commandée ; et
un émetteur de trame d'interrogation (515), adapté pour transmettre une trame d'interrogation à chacune des stations, ayant transmis les trames de demande de réservation qui sont reçues par le récepteur de trame de demande de réservation (513), à travers le canal prédéterminé selon la séquence de transmission de trame d'interrogation comprise dans la liste d'interrogation créée par l'unité de création de liste d'interrogation (514).

3. Dispositif de création de liste d'interrogation de coordinateur (51) selon la revendication 2, dans lequel une longueur de l'intervalle de contention commandée est proportionnelle au nombre de stations sur le réseau.

4. Dispositif de création de liste d'interrogation de coordinateur (51) selon l'une quelconque des revendications 1 à 3, dans lequel la trame de contention commandée comprend un champ de commande de trame, un champ de période/ID, un champ d'adresse de récepteur, un champ d'ID d'ensemble de services basiques, un champ de longueur d'intervalle de contention commandée et un champ de séquence d'inspection de trame ;
la trame de demande de réservation comprend un champ de commande de trame, un champ de période/ID, un champ d'adresse de récepteur, un champ d'ID d'ensemble de services basiques, un champ de commande de qualité de service, un champ d'ID d'association et un champ de séquence d'inspection de trame ;
la trame d'interrogation comprend un champ de commande de trame, un champ de période/ID, un champ d'adresse de récepteur, un champ d'ID d'ensemble de services basiques, un champ de commande de qualité de service, un champ de longueur de période de transmission/réception de données et un champ de séquence d'inspection de trame ; et
le champ de commande de qualité de service indique un débit, une taille de rafale, une borne de retard et une borne de gigue.

5. Dispositif de création de liste d'interrogation de station (52) comprenant :
un récepteur de trame de contention commandée (521), adapté pour recevoir une trame de contention commandée à travers un canal prédéterminé à partir d'une station de coordinateur parmi des stations sur un réseau ; et
un émetteur de trame de demande de réservation (522) adapté pour prétendre l'utilisation du canal prédéterminé pendant un intervalle de contention commandée désigné par la trame de contention commandée de sorte à acquérir un droit exclusif d'utilisation du canal prédéterminé lorsque la trame de contention commandée est reçue par le récepteur de trame de contention commandée (521), adapté pour générer une trame de demande de réservation en réponse à la trame de contention commandée lorsque le droit exclusif est acquis, et est en outre adapté pour transmettre la trame de demande de réservation à la station de coordinateur à travers le canal prédéterminé ;
**caractérisé en ce que** le réseau est un ensemble de services basiques d'un LAN sans fil ;
**en ce que** l'émetteur de trame de demande de réservation est adapté pour prétendre l'utilisation du canal prédéterminé pendant un intervalle de contention commandée désigné par la trame de contention commandée selon une valeur de priorité d'utilisateur d'une trame de données ;
et **en ce que** le dispositif de création de liste d'interrogation de station (52) est adapté pour recevoir la trame de contention commandée après qu'une période correspondant à un espace inter-trame de priorité prend fin depuis la réception d'une demande de création d'une liste d'interrogation de la station de coordinateur.

6. Dispositif de création de liste d'interrogation de station (52) selon la revendication 5, dans lequel l'émetteur de trame de demande de réservation (522) est adapté pour définir une valeur d'espace inter-trame de coordination et une valeur de fenêtre de contention selon la valeur de priorité d'utilisateur, détecter si le canal prédéterminé est utilisé après qu'une période correspondant à la valeur d'espace inter-trame de coordination et qu'un temps de reprise de transmission correspondant à la valeur de fenêtre de contention prennent fin, acquérir le droit exclusif d'utilisation du canal prédéterminé si le canal prédéterminé n'est pas utilisé, et si le canal prédéterminé est utilisé ne pas acquérir le droit exclusif d'utilisation du canal prédéterminé et redéfinir la valeur de fenêtre de contention à étendre en utilisant un algorithme de reprise de transmission.

7. Dispositif de création de liste d'interrogation de station (52) selon la revendication 6, comprenant en outre:
un récepteur de trame d'interrogation (523), adapté pour recevoir une trame d'interrogation transmise à travers le canal prédéterminé à partir de la station de coordinateur selon la séquence de transmission de trame d'interrogation comprise dans une liste d'interrogation ; et
un émetteur de trame de données (524), adapté pour transmettre la trame de données à une station de destination parmi les stations à travers le canal prédéterminé pendant une période de transmission/réception de données désignée par la trame d'interrogation lorsque la trame d'interrogation est reçue par le récepteur de trame d'interrogation (523).

8. Dispositif de création de liste d'interrogation de station (52) selon la revendication 7, dans lequel une longueur de l'intervalle de contention commandée est proportionnelle au nombre de stations.

9. Dispositif de création de liste d'interrogation de station (52) selon la revendication 8, dans lequel la trame de contention commandée comprend un champ de commande de trame, un champ de période/ID, un champ d'adresse de récepteur, un champ d'ID d'ensemble de services basiques, un champ de longueur d'intervalle de contention commandée et un champ de séquence d'inspection de trame ;
la trame de demande de réservation comprend un champ de commande de trame, un champ de période/ID, un champ d'adresse de récepteur, un champ d'ID d'ensemble de services basiques, un champ de commande de qualité de service, un champ d'ID d'association et un champ de séquence d'inspection de trame ;
la trame d'interrogation comprend un champ de commande de trame, un champ de période/ID, un champ d'adresse de récepteur, un champ d'ID d'ensemble de services basiques, un champ de commande de qualité de service, un champ de longueur de période de transmission/réception de données et un champ de séquence d'inspection de trame ; et
le champ de commande de qualité de service indique un débit, une taille de rafale, une borne de retard et une borne de gigue.

10. Dispositif pour créer une liste d'interrogation, comprenant:
un dispositif de création de liste d'interrogation de coordinateur (51) adapté pour générer une trame de contention commandée lorsque la création d'une liste d'interrogation est demandée et en outre adapté pour transmettre la trame de contention commandée à des stations sur un réseau à travers un canal prédéterminé en utilisant un procédé de diffusion, et lorsqu'une trame de demande de réservation de chacune des stations est reçue en réponse à la trame de contention commandée à travers le canal prédéterminé pendant un intervalle de contention commandée désigné par la trame de contention commandée, toujours en outre adapté pour attribuer une séquence de transmission de trame d'interrogation aux stations, à partir desquelles la trame de demande de réservation est reçue, et encore toujours en outre adapté pour créer une liste d'interrogation comprenant la séquence de transmission de trame d'interrogation ; et un appareil de création de liste d'interrogation de station (52), qui, lorsque la trame de contention commandée est reçue à travers le canal prédéterminé de le dispositif de création de liste d'interrogation de coordinateur (51), est adapté pour prétendre l'utilisation du canal prédéterminé pendant l'intervalle de contention commandée désigné par la trame de contention commandée de sorte à acquérir un droit exclusif d'utilisation du canal prédéterminé, et lorsque le droit exclusif est acquis, est en outre adapté pour générer une trame de demande de réservation en réponse à la trame de contention commandée et transmet la trame de demande de réservation à l'appareil de création de liste d'interrogation de coordinateur (51) à travers le canal prédéterminé ;
**caractérisé en ce que** le réseau est un ensemble de services basiques d'un LAN sans fil ;
**en ce que** le dispositif de création de liste d'interrogation de coordinateur (51) est adapté pour attribuer la séquence de transmission de trame d'interrogation en utilisant un procédé premier arrivé - premier servi basé sur une séquence dans laquelle les trames de demande de réservation arrivent ; et pour transmettre la trame de contention commandée après qu'une période correspondant à un espace inter-trame de priorité prend fin depuis la réception de la demande de création d'une liste d'interrogation ;
**en ce que** l'émetteur de trame de demande de réservation est adapté pour permettre l'utilisation du canal prédéterminé pendant un intervalle de contention commandée désigné par la trame de contention commandée selon une valeur de priorité d'utilisateur d'une trame de données ;
et **en ce que** le dispositif de création de liste d'interrogation de station (52) est adapté pour recevoir la trame de contention commandée après qu'une période correspondant à un espace inter-trame de priorité prend fin depuis la réception de la demande de création d'une liste d'interrogation.

11. Dispositif selon la revendication 10, dans lequel le dispositif de création de liste d'interrogation de coordinateur (51) est adapté pour demander la création de la liste d'interrogation lorsque la liste d'interrogation n'est pas créée ou lorsque toutes les trames de demande de réservation ne sont pas reçues des stations ayant transmis les trames de demande de réservation pendant l'intervalle de contention commandée, et est adapté pour transmettre une trame d'interrogation à chacune des stations, ayant transmis les trames de demande de réservation qui sont reçues, à travers le canal prédéterminé selon la séquence de transmission de trame d'interrogation comprise dans la liste d'interrogation ; et
lorsque le dispositif de création de liste d'interrogation de stations (52) reçoit la trame d'interrogation transmise à travers le canal prédéterminé du dispositif de création de liste d'interrogation de coordinateur (51) selon la séquence de transmission de trame d'interrogation comprise dans la liste d'interrogation, l'appareil de création de liste d'interrogation de station (52) est adapté pour transmettre la trame de données à une station de destination parmi les stations à travers le canal prédéterminé pendant une période de transmission/réception de données désignée par la trame d'interrogation.

12. Dispositif selon la revendication 11, dans lequel une longueur de l'intervalle de contention commandée est proportionnelle au nombre de stations.

13. Dispositif selon l'une quelconque des revendications 10 à 12, dans lequel la trame de contention commandée comprend un champ de commande de trame, un champ de période/ID, un champ d'adresse de récepteur, un champ d'ID d'ensemble de services basiques, un champ de longueur d'intervalle de contention commandée et un champ de séquence d'inspection de trame ; la trame de demande de réservation comprend un champ de commande de trame, un champ de période/ID, un champ d'adresse de récepteur, un champ d'ID d'ensemble de services basiques, un champ de commande de qualité de service, un champ d'ID d'association et un champ de séquence d'inspection de trame ;
la trame d'interrogation comprend un champ de commande de trame, un champ de période/ID, un champ d'adresse de récepteur, un champ d'ID d'ensemble de services basiques, un champ de commande de qualité de service, un champ de longueur de période de transmission/réception de données et un champ de séquence d'inspection de trame ; et
le champ de commande de qualité de service indique un débit, une taille de rafale, une borne de retard et une borne de gigue.

14. Procédé de création d'une liste d'interrogation de coordinateur, comprenant les étapes consistant à :
lorsque la création d'une liste d'interrogation est demandée, générer une trame de contention commandée et transmettre la trame de contention commandée à des stations sur un réseau à travers un canal prédéterminé en utilisant un procédé de diffusion ;
recevoir une trame de demande de réservation de chacune des stations en réponse à la trame de contention commandée à travers le canal prédéterminé pendant un intervalle de contention commandée désigné par la trame de contention commandée ;
lorsque la trame de demande de réservation est reçue, attribuer une séquence de transmission de trame d'interrogation aux stations, à partir desquelles la trame de demande de réservation est reçue, et créer une liste d'interrogation comprenant la séquence de transmission de trame d'interrogation ; **caractérisé en ce que** le réseau est un ensemble de services basiques d'un LAN sans fil ;
**en ce que** l'attribution de la séquence de transmission de trame d'interrogation est effectuée en utilisant un procédé premier arrivé - premier servi basé sur une séquence dans laquelle les trames de demande de réservation arrivent ;
et **en ce que** la trame de contention commandée est transmise après qu'une période correspondant à un espace inter-trame de priorité prend fin depuis la réception de la demande de création d'une liste d'interrogation.

15. Procédé selon la revendication 14, comprenant en outre les étapes consistant à :
demander la création de la liste d'interrogation lorsque la liste d'interrogation n'est pas créée ou lorsque toutes les trames de demande de réservation ne sont pas reçues des stations ayant transmis les trames de demande de réservation, avant la génération de la trame de contention commandée pendant l'intervalle de contention commandée ; et
transmettre une trame d'interrogation à chacune des stations, ayant transmis les trames de demande de réservation qui sont reçues, à travers le canal prédéterminé selon la séquence de transmission de trame d'interrogation comprise dans la liste d'interrogation, après la création de la liste d'interrogation.

16. Procédé selon la revendication 15, dans lequel une longueur de l'intervalle de contention commandée est proportionnelle au nombre de stations.

17. Procédé selon l'une quelconque des revendications 14 à 16, dans lequel la trame de contention commandée comprend un champ de commande de trame, un champ de période/ID, un champ d'adresse de récepteur, un champ d'ID d'ensemble de services basiques, un champ de longueur d'intervalle de contention commandée et un champ de séquence d'inspection de trame ;
la trame de demande de réservation comprend un champ de commande de trame, un champ de période/ID, un champ d'adresse de récepteur, un champ d'ID d'ensemble de services basiques, un champ de commande de qualité de service, un champ d'ID d'association et un champ de séquence d'inspection de trame ;
la trame d'interrogation comprend un champ de commande de trame, un champ de période/ID, un champ d'adresse de récepteur, un champ d'ID d'ensemble de services basiques, un champ de commande de qualité de service, un champ de longueur de période de transmission/réception de données et un champ de séquence d'inspection de trame ; et
le champ de commande de qualité de service indique un débit, une taille de rafale, une borne de retard et une borne de gigue.

18. Procédé de création d'une liste d'interrogation de station comprenant les étapes consistant à :
(a) recevoir une trame de contention commandée à travers un canal prédéterminé d'une station de coordinateur parmi des stations sur un réseau ; et
(b) lorsque la trame de contention commandée est reçue, prétendre l'utilisation du canal prédéterminé pendant un intervalle de contention commandée désigné par la trame de contention commandée de sorte à acquérir un droit exclusif d'utilisation du canal prédéterminé, générer une trame de demande de réservation en réponse à la trame de contention commandée lorsque le droit exclusif est acquis, et transmettre la trame de demande de réservation à la station de coordinateur à travers le canal prédéterminé ;
**caractérisé en ce que** le réseau est un ensemble de services basiques d'un LAN sans fil ;
**en ce que**, à l'étape (b) la prétention de l'utilisation du canal prédéterminé est effectuée selon une valeur de priorité d'utilisateur d'une trame de données ; et
**en ce que**, à l'étape (a), la trame de contention commandée est reçue après qu'une période correspondant à un espace inter-trame de priorité prend fin.

19. Procédé selon la revendication 18, dans lequel l'étape (b) comprend les étapes consistant à définir une valeur d'espace inter-trame de coordination et une valeur de fenêtre de contention selon la valeur de priorité d'utilisateur, détecter si le canal prédéterminé est utilisé après qu'une période correspondant à la valeur d'espace inter-trame de coordination et qu'un temps de reprise de transmission correspondant à la valeur de fenêtre de contention prennent fin séquentiellement, acquérir le droit exclusif d'utilisation du canal prédéterminé si le canal prédéterminé n'est pas utilisé, et redéfinir la valeur de fenêtre de contention à étendre en utilisant un algorithme de reprise de transmission lorsque le droit exclusif d'utilisation du canal prédéterminé n'est pas acquis du fait que le canal prédéterminé est utilisé.

20. Procédé selon la revendication 18 ou 19, comprenant en outre les étapes consistant à :
(c) recevoir une trame d'interrogation transmise à travers le canal prédéterminé de la station de coordinateur selon la séquence de transmission de trame d'interrogation comprise dans une liste d'interrogation ; et
(d) lorsque la trame d'interrogation est reçue, transmettre la trame de données à une station de destination parmi les stations à travers le canal prédéterminé pendant une période de transmission/réception de données désignée par la trame d'interrogation.

21. Procédé selon la revendication 20, dans lequel une longueur de l'intervalle de contention commandée est proportionnelle au nombre de stations.

22. Procédé selon l'une quelconque des revendications 18 à 21, dans lequel la trame de contention commandée comprend un champ de commande de trame, un champ de période/ID, un champ d'adresse de récepteur, un champ d'ID d'ensemble de services basiques, un champ de longueur d'intervalle de contention commandée et un champ de séquence d'inspection de trame ;
la trame de demande de réservation comprend un champ de commande de trame, un champ de période/ID, un champ d'adresse de récepteur, un champ d'ID d'ensemble de services basiques, un champ de commande de qualité de service, un champ d'ID d'association et un champ de séquence d'inspection de trame ;
la trame d'interrogation comprend un champ de commande de trame, un champ de période/ID, un champ d'adresse de récepteur, un champ d'ID d'ensemble de services basiques, un champ de commande de qualité de service, un champ de longueur de période de transmission/réception de données et un champ de séquence d'inspection de trame ; et
le champ de commande de qualité de service indique un débit, une taille de rafale, une borne de retard et une borne de gigue.

23. Procédé de création d'une liste d'interrogation, comprenant les étapes consistant à :
(a) lorsque la création d'une liste d'interrogation est demandée, générer une trame de contention commandée et transmettre la trame de contention commandée à des stations sur un réseau à travers un canal prédéterminé en utilisant un procédé de diffusion, et lorsqu'une trame de demande de réservation de chacune des stations est reçue en réponse à la trame de contention commandée à travers le canal prédéterminé pendant un intervalle de contention commandée désigné par la trame de contention commandée, attribuer une séquence de transmission de trame d'interrogation aux stations, à partir desquelles la trame de demande de réservation est reçue, et créer une liste d'interrogation comprenant la séquence de transmission de trame d'interrogation ; et
(b) lorsque la trame de contention commandée est reçue à travers le canal prédéterminé, prétendre l'utilisation du canal prédéterminé pendant l'intervalle de contention commandée désigné par la trame de contention commandée de sorte à acquérir un droit exclusif d'utilisation du canal prédéterminé, et lorsque le droit exclusif est acquis, générer une trame de demande de réservation en réponse à la trame de contention commandée et transmettre la trame de demande de réservation au dispositif de création de liste d'interrogation de coordinateur (51) à travers le canal prédéterminé ; **caractérisé en ce que** le réseau est un ensemble de services basiques d'un LAN sans fil ;
**en ce que**, à l'étape (a), la séquence de transmission de trame d'interrogation est attribuée en utilisant un procédé premier arrivé - premier servi basé sur une séquence dans laquelle les trames de demande de réservation arrivent ; et **en ce que** la trame de contention commandée est transmise après qu'une période correspondant à un espace inter-trame de priorité prend fin depuis la réception de la demande de création d'une liste d'interrogation ; et
**en ce que**, à l'étape (b), la prétention de l'utilisation du canal prédéterminé est effectuée selon une valeur de priorité d'utilisateur d'une trame de données.

24. Procédé selon la revendication 23, dans lequel l'étape (a) comprend les étapes consistant à demander la création de la liste d'interrogation lorsque la liste d'interrogation n'est pas créée ou lorsque toutes les trames de demande de réservation ne sont pas reçues des stations ayant transmis les trames de demande de réservation pendant l'intervalle de contention commandée, et transmettre une trame d'interrogation à chacune des stations, ayant transmis les trames dé demande de réservation qui sont reçues, à travers le canal prédéterminé selon la séquence de transmission de trame d'interrogation comprise dans la liste d'interrogation ; et
l'étape (b) comprend, lorsque la trame d'interrogation transmise à travers le canal prédéterminé selon la séquence de transmission de trame d'interrogation comprise dans la liste d'interrogation est reçue, l'étape consistant à transmettre la trame de données à une station de destination parmi les stations à travers le canal prédéterminé pendant une période de transmission/réception de données désignée par la trame d'interrogation.

25. Procédé selon la revendication 24, dans lequel une longueur de l'intervalle de contention commandée est proportionnelle au nombre de stations.

26. Procédé selon l'une quelconque des revendications 23 à 25, dans lequel la trame de contention commandée comprend un champ de commande de trame, un champ de période/ID, un champ d'adresse de récepteur, un champ d'ID d'ensemble de services basiques, un champ de longueur d'intervalle de contention commandée et un champ de séquence d'inspection de trame ;
la trame de demande de réservation comprend un champ de commande de trame, un champ de période/ID, un champ d'adresse de récepteur, un champ d'ID d'ensemble de services basiques, un champ de commande de qualité de service, un champ d'ID d'association et un champ de séquence d'inspection de trame ;
la trame d'interrogation comprend un champ de commande de trame, un champ de période/ID, un champ d'adresse de récepteur, un champ d'ID d'ensemble de services basiques, un champ de commande de qualité de service, un champ de longueur de période de transmission/réception de données et un champ de séquence d'inspection de trame ; et
le champ de commande de qualité de service indique un débit, une taille de rafale, une borne de retard et une borne de gigue.

27. Support d'enregistrement lisible par ordinateur **caractérisé en ce qu'**il intègre un programme informatique pour exécuter le procédé selon l'une quelconque des revendications 14 à 17.

28. Support d'enregistrement lisible par ordinateur **caractérisé en ce qu'**il intègre un programme informatique pour exécuter le procédé selon l'une quelconque des revendications 18 à 22.

29. Support d'enregistrement lisible par ordinateur **caractérisé en ce qu'**il intègre un programme informatique pour exécuter le procédé selon l'une quelconque des revendications 23 à 26.
